# EUROPEAN PATENT APPLICATION

(11) **EP 3 893 558 A1**
(43) Date of publication of application: **13.10.2021**
(21) Application number: 20737890.2
(22) Date of filing: 06.01.2020
(51) Int. Cl.: H04W 48/18

(54) **COMMUNICATION METHOD AND COMMUNICATION APPARATUS**

(30) Priority: 09.01.2019 CN 201910020841
(71) Applicant: Huawei Technologies Co., Ltd., Longgang Shenzhen, Guangdong 518129 (CN)
(72) Inventor: GE, Cuili, Shenzhen, Guangdong 518129 (CN); YANG, Yanmei, Shenzhen, Guangdong 518129 (CN); YING, Jiangwei, Shenzhen, Guangdong 518129 (CN)
(74) Representative: Goddar, Heinz J.
(86) International application number: PCT/CN2020/070382
(87) International publication number: WO 2020/143564

(57) **Abstract**

This application provides a communication method and a communications apparatus. The method includes: receiving, by a first terminal device, communication quality reference information of a Uu interface from a network device; and determining, by the first terminal device based on the communication quality reference information of the Uu interface and communication quality information of a PC5 interface, a communication mode used to send target data to a second terminal device, where the communication mode is any one of the following: a Uu interface communication mode, a PC5 interface communication mode, or a multipath communication mode, the PC5 interface is an interface for direct communication between the first terminal device and the second terminal device, and communications interfaces in the multipath communication mode include the PC5 interface and the Uu interface. According to this application, a terminal device can be enabled to more accurately determine a communications interface or a communication mode for transmitting data, to improve data transmission performance.

## Description

This application claims priority to Chinese Patent Application No. 201910020841.1, filed with the Chinese Patent Office on January 9, 2019 and entitled "COMMUNICATION METHOD AND COMMUNICATIONS APPARATUS", which is incorporated herein by reference in its entirety.

### TECHNICAL FIELD

This application relates to the communications field, and more specifically, to a communication method and a communications apparatus.

### BACKGROUND

In a wireless communications system such as a 5th-generation (5th-generation, 5G) mobile communications system, vehicle-to-everything (vehicle to everything, V2X) communication is supported. In the V2X communication, for example, communication may be performed based on a Uu interface. To be specific, V2X communication needs to be performed on a mobile operator network. Alternatively, communication may be performed based on a PC5 interface. To be specific, V2X communication is directly performed between terminals (V2X terminals). The foregoing two communication modes both have a disadvantage. For example, when mobile operator network coverage is poor, communication resources are limited, or PC5 communication resources are congested or blocked, reducing of transmission reliability is caused.

In some scenarios such as a V2X communication scenario, how to improve data transmission reliability as much as possible is a problem that currently needs to be resolved.

### SUMMARY

This application provides a communication method and a communications apparatus, to improve transmission performance.

According to a first aspect, a communication method is provided. The method may be performed by a terminal device, or may be performed by a chip or a system-on-a-chip that is configured in a terminal device.

The method includes: receiving, by a first terminal device, communication quality reference information of a Uu interface from a network device; and determining, by the first terminal device based on the communication quality reference information of the Uu interface and communication quality information of a PC5 interface, a communication mode used to send target data to a second terminal device, where the communication mode is any one of the following: a Uu interface communication mode, a PC5 interface communication mode, or a multipath communication mode, the PC5 interface is an interface for direct communication between the first terminal device and the second terminal device, and communications interfaces in the multipath communication mode include the PC5 interface and the Uu interface.

The determining, by the first terminal device based on the communication quality reference information of the Uu interface and communication quality information of a PC5 interface, a communication mode used to send target data to a second terminal device may also be understood as obtaining, by the first terminal device, communication quality of the Uu interface based on the communication quality reference information of the Uu interface, obtaining communication quality of the PC5 interface based on the communication quality information of the PC5 interface, and determining, based on the communication quality of the Uu interface and the communication quality of the PC5 interface, the communication mode used to send the target data to the second terminal device.

The determining a communication mode used to send target data to a second terminal device may also be understood as determining a communications interface used to send the target data to the second terminal device.

The Uu interface communication mode represents a mode in which communication is performed only over the Uu interface. To be specific, the first terminal device sends the target data to the second terminal device only over the Uu interface. The PC5 interface communication mode represents a mode in which communication is performed only over the PC5 interface. To be specific, the first terminal device sends the target data to the second terminal device only over the PC5 interface.

The multipath communication mode represents a mode in which communication is performed over both the PC5 interface and the Uu interface. To be specific, the first terminal device sends the target data to the second terminal device over both the Uu interface and the PC5 interface. In other words, when the first terminal device communicates with the second terminal device, the first terminal device sends the target data to the second terminal device in the PC5 interface communication mode, and also sends the target data to the second terminal device in the Uu interface communication mode. The multipath communication mode may also be referred to as a multiflow communication mode, a dual-flow communication mode, a dual-path communication mode, or the like. It should be understood that, the multipath communication mode is merely a name, and does not limit the protection scope of embodiments of this application.

Based on the foregoing technical solution, the first terminal device obtains the communication quality reference information of the Uu interface from a network device side, and determines, with reference to the communication quality information of the PC5 interface of the first terminal device, a communication mode for transmitting data or a communications interface used to transmit data. In other words, the first terminal device determines the communication quality information of the Uu interface based on the received communication quality reference information of the Uu interface, determines the communication quality of the PC5 interface based on the communication quality of the PC5 interface of the first terminal device, and determines the communication mode for transmitting the data. According to the foregoing solution, the first terminal device comprehensively considers communication quality of various communications interfaces to determine the communication mode for transmitting the target data, thereby dynamically adjusting, in consideration of changes in the communication quality of the communications interfaces, the communication mode for transmitting the data. For example, when the communication quality of the Uu interface deteriorates or is poor, the first terminal device may determine, based on the communication quality information of the PC5 interface and the communication quality reference information of the Uu interface that are obtained, to transmit the target data in the PC5 interface communication mode. For another example, when the communication quality of the PC5 interface deteriorates or is poor, the first terminal device may determine, based on the communication quality information of the PC5 interface and the communication quality reference information of the Uu interface that are obtained, to transmit the target data in the Uu interface communication mode. For another example, when both the communication quality of the PC5 interface and the communication quality of the Uu interface are poor, the first terminal device may determine, based on the communication quality information of the PC5 interface and the communication quality reference information of the Uu interface that are obtained, to transmit the target data in the multipath communication mode, to ensure data transmission performance. According to this application, the first terminal device can comprehensively consider the communication quality of the various communications interfaces, for example, consider which communications interface has better communication quality, has communication quality meeting a preset condition, or has communication quality meeting a requirement of the target data, and can determine a more appropriate communication mode based on an actual communication status, to better transmit the target data, improve the data transmission performance, and improve user experience.

With reference to the first aspect, in some implementations of the first aspect, the communication quality reference information of the Uu interface includes: communication quality information of a Uu interface of the first terminal device and/or communication quality information of a Uu interface of the second terminal device; or indication information, where the indication information is used to indicate whether communication quality of the Uu interface meets a service requirement of the target data, and the Uu interface includes a Uu interface of the first terminal device and/or a Uu interface of the second terminal device.

With reference to the first aspect, in some implementations of the first aspect, the determining, by the first terminal device based on the communication quality reference information of the Uu interface and communication quality information of a PC5 interface, a communication mode used to send target data to a second terminal device includes: determining, by the first terminal device based on the communication quality reference information of the Uu interface, the communication quality information of the PC5 interface, and the service requirement of the target data, the communication mode used to send the target data to the second terminal device.

The service requirement may include an application requirement corresponding to a service, for example, a level of automation (Level of Autonomous, LoA), and may further include a communication requirement corresponding to the service, for example, a communication quality of service (quality of service, QoS) requirement, including but not limited to a resource type, a priority, a transmission delay, a packet loss rate, a throughput, and the like. This is not limited in the embodiments of this application.

Based on the foregoing technical solution, the first terminal device may comprehensively consider the communication quality reference information of the Uu interface, the communication quality information of the PC5 interface, and the service requirement of the target data, to determine the communications interface used to send the target data to the second terminal device, thereby more accurately determining, with reference to the service requirement of the target data, the communication mode for sending the target data.

With reference to the first aspect, in some implementations of the first aspect, the communication quality reference information of the Uu interface includes the indication information; the determining, by the first terminal device based on the communication quality reference information of the Uu interface, the communication quality information of the PC5 interface, and the service requirement of the target data, the communication mode used to send the target data to the second terminal device includes: determining, by the first terminal device based on the communication quality information of the PC5 interface, that communication quality of the PC5 interface does not meet the service requirement of the target data; and when the indication information is used to indicate that the communication quality of the Uu interface meets the service requirement of the target data, determining, by the first terminal device, that the communication mode used to send the target data to the second terminal device is the Uu interface communication mode; or when the indication information is used to indicate that the communication quality of the Uu interface does not meet the service requirement of the target data, determining, by the first terminal device, that the communication mode used to send the target data to the second terminal device is the PC5 interface communication mode.

Based on the foregoing technical solution, the communication mode is determined depending on whether the communication quality of the PC5 interface or the communication quality of the Uu interface meets the service requirement of the target data. For example, when the communication quality of the PC5 interface does not meet the service requirement of the target data, if the communication quality of the Uu interface meets the service requirement of the target data, the first terminal device determines that the communication mode for transmitting the target data to the second terminal device is the Uu interface communication mode; otherwise, the first terminal device determines that the communication mode for transmitting the target data to the second terminal device is the PC5 interface communication mode.

With reference to the first aspect, in some implementations of the first aspect, the communication quality reference information of the Uu interface includes the indication information; the determining, by the first terminal device based on the communication quality reference information of the Uu interface, the communication quality information of the PC5 interface, and the service requirement of the target data, the communication mode used to send the target data to the second terminal device includes: when the indication information is used to indicate that the communication quality of the Uu interface does not meet the service requirement of the target data, and the first terminal device determines, based on the communication quality information of the PC5 interface, that communication quality of the PC5 interface meets the service requirement of the target data, determining, by the first terminal device, that the communication mode used to send the target data to the second terminal device is the PC5 interface communication mode.

With reference to the first aspect, in some implementations of the first aspect, the communication quality reference information of the Uu interface includes the indication information; the determining, by the first terminal device based on the communication quality reference information of the Uu interface, the communication quality information of the PC5 interface, and the service requirement of the target data, the communication mode used to send the target data to the second terminal device includes: when the indication information is used to indicate that the communication quality of the Uu interface does not meet the service requirement of the target data, and the first terminal device determines, based on the communication quality information of the PC5 interface, that communication quality of the PC5 interface does not meet the service requirement of the target data, determining, by the first terminal device, that the communication mode used to send the target data to the second terminal device is the Uu interface communication mode, or determining, by the first terminal device, that the communication mode used to send the target data to the second terminal device is the multipath communication mode.

Based on the foregoing technical solution, when neither the communication quality of the PC5 interface nor the communication quality of the Uu interface meets the service requirement of the target data, the first terminal device may determine that the communication mode used to transmit the target data to the second terminal device is the Uu interface communication mode; or the first terminal device may determine that the communication mode used to transmit the target data to the second terminal device is the multipath communication mode, to ensure the data transmission performance.

With reference to the first aspect, in some implementations of the first aspect, the method further includes: receiving, by the first terminal device, a service requirement that is adapted to the communication quality of the Uu interface and that is from the network device; and updating, by the first terminal device, the service requirement of the target data based on the service requirement adapted to the communication quality of the Uu interface.

The service requirement adapted to the communication quality of the Uu interface may be understood as a service requirement that the communication quality of the Uu interface meets. For example, the first terminal device may adjust or update the service requirement of the target data, so that the first terminal device can transmit the target data by using or over the Uu interface. The service requirement adapted to the communication quality of the Uu interface may alternatively be understood as a service requirement of a service, where the communication quality of the Uu interface can meet the service. In other words, the first terminal device may transmit data of the service over the Uu interface and the service requirement is met. For example, the first terminal device may change a service, so that the first terminal device can transmit data of the service over the Uu interface, and a service requirement is met.

Based on the foregoing technical solution, the first terminal device may obtain the service requirement adapted to the communication quality of the Uu interface, thereby updating the service requirement based on the service requirement adapted to the communication quality of the Uu interface, to better transmit data.

With reference to the first aspect, in some implementations of the first aspect, the method further includes: sending, by the first terminal device, the target data to the second terminal device in the determined communication mode.

Based on the foregoing technical solution, when the first terminal device determines that the communication mode is the PC5 interface communication mode, the first terminal device sends the target data to the second terminal device only over the PC5 interface. When the first terminal device determines that the communication mode is the Uu interface communication mode, the first terminal device sends the target data to the second terminal device only over the Uu interface. When the first terminal device determines that the communication mode is the multipath communication mode, the first terminal device sends the target data to the second terminal device over both the Uu interface and the PC5 interface.

With reference to the first aspect, in some implementations of the first aspect, the method further includes: requesting, by the first terminal device from the network device, the communication quality reference information of the Uu interface.

Based on the foregoing technical solution, the first terminal device may request, from the network device, the communication quality reference information of the Uu interface when required, so that unnecessary signaling overheads can be reduced, and resources can be saved.

With reference to the first aspect, in some implementations of the first aspect, the requesting, by the first terminal device from the network device, the communication quality reference information of the Uu interface includes: sending, by the first terminal device, a request message to the network device, where the request message is used to request the communication quality reference information of the Uu interface, and the request message includes at least one of the following: identifier information of the target data, the service requirement of the target data, a target area of the target data, identity information of the second terminal device, or identity information of the first terminal device, where the target area is a corresponding area to which the target data is to be transmitted.

The target area may include a network area and/or a geographical location area. For example, when the target data is transmitted in a broadcast manner, the network area and/or the geographical location area for transmitting the target data are/is considered.

With reference to the first aspect, in some implementations of the first aspect, when the determined communication mode is the PC5 interface communication mode, the method further includes: sending, by the first terminal device, a communication mode indication message to the network device, where the communication mode indication message is used to indicate that the first terminal device performs communication in the PC5 interface communication mode.

Based on the foregoing technical solution, the first terminal device sends the communication mode indication message to the network device, so that the network device can be triggered to release a communication resource on the Uu interface of the first terminal device, to avoid a waste of resources.

According to a second aspect, a communication method is provided. The method may be performed by a network device, or may be performed by a chip or a system-on-a-chip that is configured in a network device.

The method includes: obtaining, by a network device, communication quality reference information of a Uu interface, where the Uu interface includes a Uu interface of a first terminal device and/or a Uu interface of a second terminal device, the first terminal device is a transmit end of target data, and the second terminal device is a receive end of the target data; and sending, by the network device, the communication quality reference information of the Uu interface to the first terminal device.

Based on the foregoing technical solution, the network device sends communication quality reference information of the Uu interface of the first terminal device and/or communication quality reference information of the Uu interface of the second terminal device to the first terminal device. In other words, the network device sends the communication quality reference information of the Uu interfaces related to the target data to the first terminal device, so that the first terminal device determines, based on communication quality information of a PC5 interface of the first terminal device and the obtained communication quality reference information of the Uu interface, a communication mode for transmitting data to the second terminal device. In this way, the first terminal device can dynamically adjust, in consideration of changes in the communication quality of the communications interfaces, the communication mode for transmitting the data, and can determine a more appropriate communication mode based on an actual communication status, to better transmit the target data, improve data transmission performance, and improve user experience.

With reference to the second aspect, in some implementations of the second aspect, the communication quality reference information of the Uu interface includes: communication quality information of the Uu interface of the first terminal device and/or communication quality information of the Uu interface of the second terminal device; or indication information, where the indication information is used to indicate whether communication quality of the Uu interface meets a service requirement of the target data.

With reference to the second aspect, in some implementations of the second aspect, obtaining, by the network device, the communication quality reference information of the Uu interface corresponding to target data includes: receiving, by the network device, a request message from the first terminal device, where the request message is used to request the communication quality reference information of the Uu interface; and obtaining, by the network device based on the request message, the communication quality reference information of the Uu interface corresponding to target data.

Based on the foregoing technical solution, the network device may send the communication quality reference information of the Uu interface to the first terminal device after receiving, from the first terminal device, a request message for requesting the communication quality of the Uu interface, so that signaling overheads are reduced.

With reference to the second aspect, in some implementations of the second aspect, the request message includes at least one of the following: identifier information of the target data, the service requirement of the target data, a target area of the target data, identity information of the second terminal device, or identity information of the first terminal device, where the target area is a corresponding area to which the target data is to be transmitted.

With reference to the second aspect, in some implementations of the second aspect, when communication quality of the Uu interface of the first terminal device meets the service requirement of the target data, the indication information is used to indicate that the communication quality of the Uu interface of the first terminal device meets the service requirement of the target data; when communication quality of the Uu interface of the first terminal device does not meet the service requirement of the target data, the indication information is used to indicate that the communication quality of the Uu interface of the first terminal device does not meet the service requirement of the target data; when communication quality of the Uu interface of the second terminal device meets the service requirement of the target data, the indication information is used to indicate that the communication quality of the Uu interface of the second terminal device meets the service requirement of the target data; when communication quality of the Uu interface of the second terminal device does not meet the service requirement of the target data, the indication information is used to indicate that the communication quality of the Uu interface of the second terminal device does not meet the service requirement of the target data; or when communication quality of the Uu interface of the first terminal device meets the service requirement of the target data, and communication quality of the Uu interface of the second terminal device meets the service requirement of the target data, the indication information is used to indicate that both the communication quality of the Uu interface of the first terminal device and the communication quality of the Uu interface of the second terminal device meet the service requirement of the target data.

With reference to the second aspect, in some implementations of the second aspect, when the communication quality of the Uu interface does not meet the service requirement of the target data, the method further includes: sending, by the network device, a service requirement adapted to the communication quality of the Uu interface to the first terminal device.

The service requirement adapted to the communication quality of the Uu interface may be understood as a service requirement that the communication quality of the Uu interface meets. For example, the first terminal device may adjust or update the service requirement of the target data, so that communication can be performed over the Uu interface. The service requirement adapted to the communication quality of the Uu interface may alternatively be understood as a service requirement of a service, where the communication quality of the Uu interface can meet the service. In other words, the first terminal device may transmit data of the service over the Uu interface and the service requirement is met. For example, the first terminal device may change a service, so that the first terminal device can transmit data of the service over the Uu interface, and a service requirement is met.

Based on the foregoing technical solution, the network device sends the service requirement adapted to the communication quality of the Uu interface to the first terminal device, so that the first terminal device can update the service requirement based on the service requirement adapted to communication quality of the Uu interface, to better transmit data.

With reference to the second aspect, in some implementations of the second aspect, the method further includes: receiving, by the network device, a communication mode indication message from the first terminal device, where the communication mode indication message is used to indicate that the first terminal device performs communication in a PC5 interface communication mode; and releasing, by the network device, a communication resource on the Uu interface of the first terminal device based on the communication mode indication message.

Based on the foregoing technical solution, the first terminal device sends the communication mode indication message to the network device, so that the network device can be triggered to release the communication resource on the Uu interface of the first terminal device.

According to a third aspect, this application provides a communications apparatus, configured to perform a function performed by the first terminal device in any one of the first aspect or the possible implementations of the first aspect. The function may be implemented by hardware, or may be implemented by hardware executing corresponding software. The hardware or the software includes one or more units or modules corresponding to the foregoing function.

In a possible design, the apparatus includes a processor and a transceiver. The processor is configured to support the apparatus in implementing a corresponding function in the foregoing method. The transceiver is configured to support communication between the apparatus and another network element. The apparatus may further include a memory, where the memory is configured to be coupled to the processor, and the memory stores a program instruction and data that are necessary for the apparatus.

According to a fourth aspect, this application provides a communications apparatus, configured to perform a function performed by the network device in any one of the second aspect or the possible implementations of the second aspect. The function may be implemented by hardware, or may be implemented by hardware executing corresponding software. The hardware or the software includes one or more units or modules corresponding to the foregoing function.

In a possible design, the apparatus includes a processor and communications interface. The processor is configured to support the apparatus in implementing a corresponding function in the foregoing method. The communications interface is configured to support communication between the apparatus and another network element. The apparatus may further include a memory, where the memory is configured to be coupled to the processor, and the memory stores a program instruction and data that are necessary for the apparatus.

According to a fifth aspect, this application provides a communications system. The communications system includes the communications apparatuses according to the third aspect and the fourth aspect.

According to a sixth aspect, this application provides a computer-readable storage medium, configured to store a computer software instruction used by the foregoing first terminal device. The computer software instruction includes a program designed for performing the method in the first aspect or the implementations of the first aspect.

According to a seventh aspect, this application provides a computer-readable storage medium, configured to store a computer software instruction used by the foregoing network device. The computer software instruction includes a program designed for performing the method in the second aspect or the implementations of the second aspect.

According to an eighth aspect, this application provides a computer program product including an instruction. The computer program product includes computer program code, and the computer program code is used to perform the method in the first aspect or the implementations of the first aspect.

According to a ninth aspect, this application provides a computer program product including an instruction. The computer program product includes computer program code, and the computer program code is used to perform the method in the second aspect or the implementations of the second aspect.

According to a tenth aspect, this application provides a computer chip. The computer chip enables a computer to perform the method according to any one of the first aspect or the possible implementations of the first aspect.

According to an eleventh aspect, this application provides a computer chip. The computer chip enables a computer to perform the method according to any one of the second aspect or the possible implementations of the second aspect.

Effects that can be achieved in any one of the third to the eleventh aspects or the possible implementations of the third to the eleventh aspects are consistent with corresponding effects of the first and the second aspects. Details are not described again.

### BRIEF DESCRIPTION OF DRAWINGS

FIG. 1 is a schematic diagram of a network architecture;
FIG. 2 is a schematic diagram of another network architecture;
FIG. 3 is a schematic diagram of an application layer architecture;
FIG. 4 is a schematic block diagram of a communication method according to an embodiment of this application;
FIG. 5 is a schematic flowchart of a communication method according to another embodiment of this application;
FIG. 6 is a schematic flowchart of a communication method according to still another embodiment of this application;
FIG. 7 is a schematic flowchart of a communication method according to yet another embodiment of this application;
FIG. 8 is a schematic block diagram of a communications apparatus according to an embodiment of this application;
FIG. 9 is a schematic structural diagram of a terminal device according to an embodiment of this application;
FIG. 10 is a schematic block diagram of another communications apparatus according to an embodiment of this application;
FIG. 11 is a schematic structural diagram of a first network device according to an embodiment of this application;
FIG. 12 is a schematic block diagram of still another communications apparatus according to an embodiment of this application; and
FIG. 13 is a schematic structural diagram of a second network device according to an embodiment of this application.

### DESCRIPTION OF EMBODIMENTS

The following describes technical solutions in this application with reference to accompanying drawings.

The technical solutions provided in embodiments of this application may be applied to various communications systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a worldwide interoperability for microwave access (worldwide interoperability for microwave access, WiMAX) communications system, a future 5th generation (5th generation, 5G) system, or a new radio (new radio, NR) system.

Usually, a conventional communications system supports a limited quantity of connections, and the connections are easy to implement. However, as communications technologies develop, a mobile communications system not only supports conventional communication, but also supports, for example, device-to-device (device to device, D2D) communication, machine-to-machine (machine to machine, M2M) communication, machine type communication (machine type communication, MTC), and vehicle-to-everything (vehicle to everything, V2X) communication (which may also be referred to as connected-vehicle-to-everything communication) such as vehicle-to-vehicle (vehicle to vehicle, V2V) communication (which may also be referred to as vehicle-to-vehicle communication), vehicle-to-infrastructure (vehicle to infrastructure, V2I) communication (which may also be referred to as vehicle-to-infrastructure communication), vehicle-to-pedestrian (vehicle to pedestrian, V2P) communication (which may also be referred to as vehicle-to-person communication), and vehicle-to-network (vehicle to network, V2N) communication (which may also be referred to as vehicle-to-network communication).

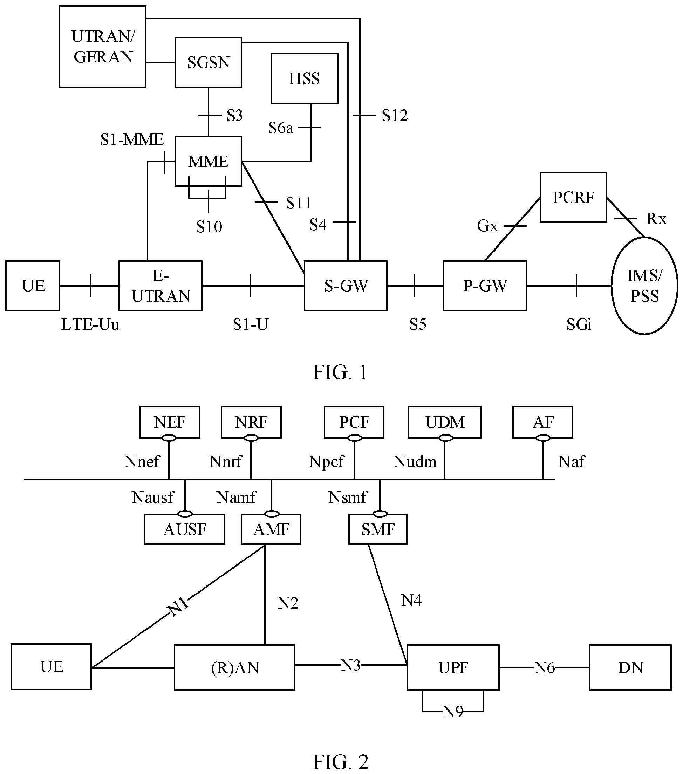

FIG. 1 provides a network architecture. The following separately describes, with reference to FIG. 1, network elements that may be in the network architecture.
1. User equipment (user equipment, UE): The UE may be referred to as a terminal device, a terminal, an access terminal, a subscriber unit, a subscriber station, a mobile station, a mobile console, a remote station, a remote terminal, a mobile device, a user terminal, a wireless communications device, a user agent, or a user apparatus. Alternatively, the UE may be a cellular phone, a cordless phone, a session initiation protocol (session initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in the future 5G network, a terminal device in a future evolved public land mobile network (public land mobile network, PLMN), or the like, may be an end device, a logical entity, an intelligent device, a terminal device such as a mobile phone or an intelligent terminal, a communications device such as a server, a gateway, a base station, or a controller, or an internet of things (Internet of things, IoT) device such as a sensor, an electricity meter, or a water meter, or may be an unmanned aerial vehicle (Unmanned Aerial Vehicle, UAV) having a communication function. This is not limited in the embodiments of this application.
2. Universal mobile telecommunications system (universal mobile telecommunications system, UMTS) terrestrial radio access network (UMTS terrestrial radio access network, UTRAN): The UTRAN is, for example, a 3rd generation (3rd generation, 3G)/2nd generation (2nd generation, 2G) access network.
3. Global system for mobile communications (global system for mobile communication, GSM)/Enhanced data rates for GSM evolution (enhanced data rate for GSM evolution, EDGE) terrestrial radio access network (GSM/EDGE terrestrial radio access network, GERAN): The GERAN is, for example, the 3G/2G access network.
4. Evolved universal terrestrial radio access network (evolved universal terrestrial radio access network, E-UTRAN): The E-UTRAN is, for example, a 4th generation (4th generation, 4G) access network.
5. Serving gateway (serving gateway, S-GW) entity: The S-GW entity may be responsible for functions such as user plane processing and data packet routing and forwarding.
6. Public data network (public data network, PDN) gateway (PDN gateway, P-GW) entity: The P-GW entity is an anchor of a user plane data link between 3rd generation partnership project (3rd Generation Partnership Project, 3GPP) and non-3GPP networks, and may be responsible for managing data routing between a 3GPP and a non-3GPP.
7. Mobility management entity (mobility management entity, MME): The MME is mainly responsible for functions such as mobility management, bearer management, user authentication, and selection of an S-GW and a P-GW.
8. Operator's IP services (operator's IP services): For example, the operator's IP services may be services provided by an IP multimedia subsystem (IP multimedia subsystem, IMS), where the IMS is a general network architecture that provides a multimedia service based on an internet protocol (Internet Protocol, IP) network; and for another example, the operator's IP services may be packet switching services (packet switching service, PSS).
9. Policy and charging rules function (policy and charging rules function, PCRF) unit: The PCRF unit is a policy decision point for policy and charging control of a service data flow and an IP bearer resource, and may select and provide an available policy and charging control decision for a policy and charging enforcement function unit.
10. Home subscriber server (home subscriber server, HSS): The HSS is a major user database that can support an IMS network entity used to process a call/a session, and the HSS may include a user profile, performs authentication and authorization of a user identity, and may provide information about a physical location of a user.
11. Serving general packet radio service (general packet radio service, GPRS) support node (serving GPRS support node, SGSN): The SGSN may perform functions such as routing and forwarding of packet data packets, mobility management, session management, logical link management, authentication and encryption, and generation and output of a charging data record.

In the network architecture, an LTE-Uu interface is a reference point between a terminal and the E-UTRAN. An S1-U interface is a reference point between the E-UTRAN and the S-GW entity. An N5 interface is a reference point between the S-GW entity and the P-GW entity. An SGi interface is a reference point between the P-GW entity and the IMS. An Rx interface is a reference point between the IMS and the PCRF. A Gx interface is a reference point between the P-GW entity and the PCRF. A control plane interface S1-MME connects the MME to the E-UTRAN, and is similar to a control part of a radio network layer in a UMTS network. An S11 interface is a reference point between the MME and the S-GW entity. An S12 interface is a reference point between the UTRAN/the GERAN and the S-GW entity. An S4 interface is a reference point between the SGSN and the S-GW entity. An S6a interface is a reference point between the MME and the HSS. An S3 interface is a reference point between the MME and the SGSN.

FIG. 2 provides another network architecture. The following separately describes, with reference to FIG. 2, network elements that may be in the network architecture.
1. UE: The UE has been described above with reference to FIG. 1. For brevity, details are not described herein again.
2. Access network (access network, AN): The AN provides a network access function for an authorized user in a specific area, and can use transmission tunnels of different quality based on user levels, service requirements, and the like. The access network may use different access technologies. Current radio access technologies are of two types: a 3GPP access technology (for example, a radio access technology used in a 3G, 4G, or 5G system) and a non-3rd generation partnership project (non-3GPP) access technology. The 3GPP access technology is an access technology that complies with a 3GPP standard specification. An access network using the 3GPP access technology is referred to as a radio access network (Radio Access Network, RAN). An access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in Wi-Fi.
   An access network that implements a network access function based on a wireless communications technology may be referred to as the radio access network (radio access network, RAN). The radio access network can manage a radio resource, provide an access service for a terminal, and complete forwarding of a control signal and user data between the terminal and a core network.
   The radio access network may be, for example, a NodeB (NodeB), an evolved NodeB (evolved NodeB, eNB or eNodeB), a gNB (gNB) in a 5G mobile communications system, a base station in a future mobile communications system, or an AP in a Wi-Fi system, or may be a radio controller in a cloud radio access network (cloud radio access network, CRAN) scenario. Alternatively, the access network device may be a relay station, an access point, a vehicle-mounted device, a wearable device, a network device in a future 5G network, a network device in a future evolved PLMN, or the like. A specific technology and a specific device form that are used by a radio access network device are not limited in the embodiments of this application.
3. Access and mobility management function (access and mobility management function, AMF) entity: The AMF entity is mainly used for mobility management, access management, and the like, and may be used to implement a function, for example, a lawful interception function or an access authorization (or authentication) function, other than session management in functions of a mobility management entity (mobility management entity, MME).
4. Session management function (session management function, SMF) entity: The SMF entity is mainly configured to manage a session, allocate and manage an IP address of the UE, select a manageable user plane function, serve as a termination point of a policy control or charging function interface, notify downlink data, and so on.
5. User plane function (User Plane Function, UPF) entity: The UPF entity is a data plane gateway, and may be used for packet routing and forwarding, quality of service (quality of service, QoS) processing of user plane data, or the like. User data may access a data network (data network, DN) via the network element. In the embodiments of this application, the UPF entity may be configured to implement a function of a user plane gateway.
6. Data network (DN): The DN is a network used to provide service data, for example, an operator service network, the internet (Internet), or a third-party service network.
7. Authentication server function (authentication server function, AUSF) entity: The AUSF entity is mainly configured to authenticate a user and so on.
8. Network exposure function (network exposure function, NEF) entity: The NEF entity is used to securely expose, to the outside, a service, a capability, and the like that are provided by a 3GPP network function.
9. Network repository function ((network function (NF) repository function, NRF) entity: The NRF entity is configured to store description information of a network function entity and description information of a service provided by the network function entity, and support service discovery, network element entity discovery, and the like.
10. Policy control function (policy control function, PCF) entity: The PCF entity is a unified policy framework used to provide guidance on network behavior, and provides policy and rule information and the like for control plane function network elements (for example, AMF and SMF network elements).
11. Unified data management (unified data management, UDM) entity: The UDM entity is configured to perform user identity processing, access authentication, registration, mobility management, or the like.
12. Application function (application function, AF) entity: The AF entity is configured to influence data routing, access a network exposure function network element, interact with a policy framework to perform policy control, or the like. For example, the AF entity may be a V2X application server, including a V2X application enabler server, or may be a drone server (which may include a drone supervision server or a drone application service server).

In the network architecture shown in FIG. 2, an N1 interface is a reference point between the terminal and the AMF entity. An N2 interface is a reference point between the AN and the AMF entity, and is configured to send a non-access stratum (non-access stratum, NAS) message and so on. An N3 interface is a reference point between the (R)AN and the UPF entity, and is configured to transmit user plane data and so on. An N4 interface is a reference point between the SMF entity and the UPF entity, and is configured to transmit information such as tunnel identifier information of an N3 connection, data buffer indication information, and a downlink data notification message. An N6 interface is a reference point between the UPF entity and the DN, and is configured to transmit the user plane data and the like.

It should be understood that, the network architectures shown in FIG. 1 and FIG. 2 may be applied to the embodiments of this application. In addition, a network architecture applicable to the embodiments of this application is not limited thereto. Any network architecture that can implement functions of the foregoing network elements is applicable to the embodiments of this application.

It should be further understood that, the AMF entity, the SMF entity, the UPF entity, the NEF entity, the AUSF entity, the NRF entity, the PCF entity, and the UDM entity that are shown in FIG. 1 or FIG. 2 may be understood as network elements that are in the core network and that are configured to implement different functions, and for example, may be combined into a network slice as required. The core network elements may be independent devices, or may be integrated into a same device to implement different functions. This is not limited in this application. It should be noted that, the "network element" may also be referred to as an entity, a device, an apparatus, a module, or the like. This is not particularly limited in this application.

It should be further understood that, the foregoing names are merely used to distinguish between different functions, and do not mean that the network elements are independent physical devices. Specific forms of the foregoing network elements are not limited in this application. For example, the network elements may be integrated into a same physical device, or may be different physical devices. In addition, the foregoing names are merely for ease of distinguishing between the different functions, and shall not constitute any limitation on this application. This application does not exclude a possibility of using another name in the 5G network and another future network. For example, in a 6G network, some or all of the foregoing network elements may use a term in 5G, or may use another name. A unified description is provided herein, and details are not described below again.

It should be further understood that, names of interfaces between the network elements in FIG. 1 or FIG. 2 are merely an example. During specific implementation, the names of the interfaces may be other names. This is not specifically limited in this application. In addition, names of messages (or signaling) transmitted between the foregoing network elements are merely an example, and do not constitute any limitation on functions of the messages.

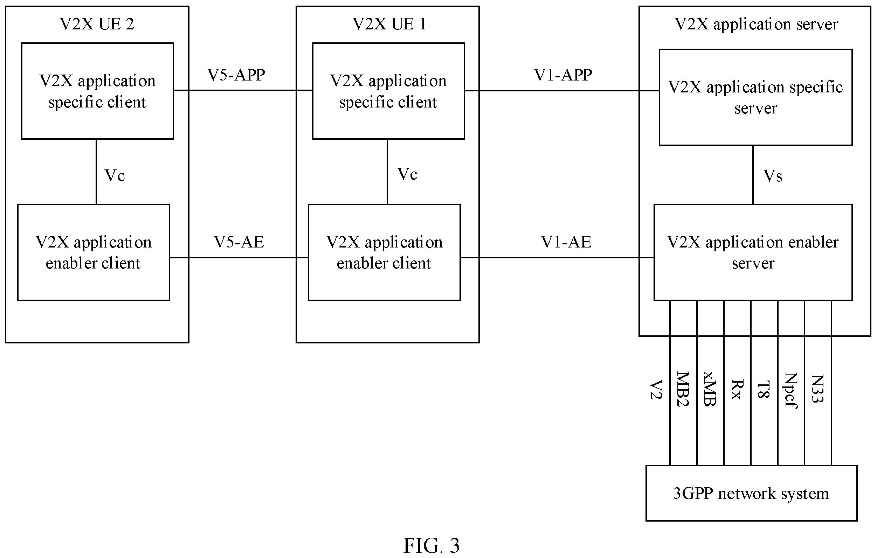

FIG. 3 is a schematic diagram of an application layer architecture.

As shown in FIG. 3, V2X UE 1, V2X UE 2, and a V2X application server (V2X application server) are included. The V2X UE 1 includes a V2X application specific client (V2X application specific client) and a V2X application enabler client (V2X application enabler client). The V2X UE 2 includes a V2X application specific client and a V2X application enabler client. The V2X application server includes a V2X application specific server and a V2X application enabler server.

The V2X application enabler server supports at least the following functions: communicating with a 3GPP network element to obtain a unicast or broadcast communication resource and perform QoS adaptation, receiving, from the 3GPP network element, a monitoring report and an event that are about a network status, providing a monitoring event to the V2X application server, performing location management on multimedia broadcast/multicast service (multimedia broadcast/multicast service, MBMS)-based V2X communication, configuring a Prose layer-2 group identifier of group communication for V2X UE, provisioning a configuration parameter of a V2X USD, configuring and provisioning a PC5 interface parameter, and the like.

The V2X application enabler client supports at least the following functions: listening to and reporting MBMS receiving quality, discovering local V2X service information, reporting a location, supporting PC5 V2X group communication, supporting PC5 parameter configuration, supporting V2X USD configuration parameter provisioning, interacting with one or more V2X application specific clients, and the like.

This architecture is also applicable to a drone service. In this case, a drone terminal may include a drone client (for example, a drone application service client, a drone supervision client, or a drone application enabler client). A server may be a drone server (for example, a drone application service server, a drone supervision server, or a drone application enabler server).

V2X communication has a plurality of communication modes, for example, a communication mode that is based only on a Uu interface, which may also be referred to as a Uu communication mode or a Uu interface communication mode, and represents that communication is performed by using only a Uu interface technology, that is, the communication is network communication, and V2X communication data needs to be transmitted on a mobile operator network; for another example, a communication mode that is based only on a PC5 interface, which may also be referred to as a PC5 communication mode or a PC5 interface communication mode, and represents that communication is performed by using a PC5 interface technology, that is, the communication is direct communication, and V2X communication data is directly transmitted between terminal devices (V2X terminal devices); and for another example, a communication mode that is based on a PC5 interface and a Uu interface, which may also be referred to as a multipath communication mode, a multiflow communication mode, a dual-flow communication mode, a dual-path communication mode, a PC5 and Uu interface communication mode, or the like, and represents that communication is performed over the PC5 interface and the Uu interface, and V2X communication data is directly transmitted between terminal devices (V2X terminal devices) and is transmitted on a mobile operator network.

It should be understood that, the foregoing names are merely used to distinguish between different communication modes, and do not constitute a limitation on the embodiments of this application.

For the V2V communication data, communication may be performed by using or over the PC5 interface, or communication may be performed by using or over the Uu interface. In consideration of that some V2V applications require quite high reliability (for example, reliability that reaches 99.999%) and a quite low delay, and in consideration of some factors, for example, that a licensed spectrum is used in the communication mode that is based on the Uu interface, for another example, that a quality of service (quality of service, QoS) guarantee cannot (which may affect transmission reliability of a service) be provided in the communication mode that is based on the PC5 interface, and for another example, that scheduling is performed by using a network device (for example, a base station) in the communication mode that is based on the Uu interface, so that interference and congestion processing is better, and transmission reliability can be improved, this may need data between two or more vehicles to be transmitted in a Uu interface mode. In addition, for V2N communication and V2I communication, continuity that a service has when there is coverage and when there is no coverage needs to be considered. Therefore, in a V2X communication scenario, which interface is used to transmit V2X data is a problem that needs to be resolved.

In view of this, the embodiments of this application provide a communication method. A terminal device determines, based on communication quality information of a PC5 interface and obtained communication quality reference information of a Uu interface, a communication mode used for communication.

The following describes the embodiments of this application in detail with reference to the accompanying drawings.

For ease of understanding the embodiments of this application, the following descriptions are first provided before the embodiments of this application are described.

In the embodiments of this application, "first", "second", "third", "fourth", and various numerical numbers are merely used for distinguishing for ease of description, and are not used to limit the scope of the embodiments of this application. For example, "first", "second", "third", "fourth", and the various numerical numbers are used to distinguish between different indication information and different network devices.

In the embodiments of this application, a "PC5 communication mode" or a "PC5 interface communication mode" represents a mode in which communication is performed only over the PC5 interface. For example, "the terminal device performs communication in the PC5 communication mode" or "the terminal device performs communication in the PC5 interface communication mode" represents that the terminal device performs communication by using or over only the PC5 interface, or may be understood as that the terminal device receives data and/or sends data only over the PC5 interface. The following all uses the "PC5 interface communication mode" for representation.

Similarly, a "Uu communication mode" or a "Uu interface communication mode" represents a mode in which communication is performed only over the Uu interface. For example, "the terminal device performs communication in the Uu communication mode" or "the terminal device performs communication in the Uu interface communication mode" represents that the terminal device performs communication by using or over only the Uu interface, or may be understood as that the terminal device receives data and/or sends data only over the Uu interface. The following all uses the "Uu interface communication mode" for representation.

Similarly, a "multipath communication mode" represents a mode in which communication is performed over the Uu interface and the PC5 interface. For example, "the terminal device performs communication in the multipath communication mode" represents that the terminal device performs communication over the Uu interface and the PC5 interface, or may be understood as that the terminal device receives data and/or sends data over the Uu interface and the PC5 interface.

In the embodiments of this application, "determining a communication mode" and "determining a communications interface" are mentioned for a plurality of times, and a person skilled in the art may understand meanings of "determining a communication mode" and "determining a communications interface". Both "determining a communication mode" and "determining a communications interface" may be used to represent determining a communication mode or a communications interface that is used by a first terminal device to transmit target data to a second terminal device. In the embodiments of this application, meanings to be expressed by "determining a communication mode" and "determining a communications interface" are consistent when a difference between "determining a communication mode" and "determining a communications interface" is not emphasized.

In the embodiments of this application, "communication quality information of a PC5 interface" may be used to represent communication quality of the PC5 interface. For example, the communication quality information of the PC5 interface may be obtained by measuring the communication quality of the PC5 interface. "Communication quality information of the Uu interface" may be used to represent communication quality of the Uu interface. For example, the communication quality information of the Uu interface may be obtained by measuring the communication quality of the Uu interface. The Uu interface may be a Uu interface of the first terminal device, or may be a Uu interface of the second terminal device. The first terminal device is a transmit end of the target data, and the second terminal device is a receive end of the target data. This is not limited.

The communication quality may include a communication rate, communication reliability, a transmission delay, a packet loss rate, or the like.

In the embodiments of this application, a "service" may be used to describe an application (application), a service (service), a session (session), or the like, for example, a V2X application layer session or an intelligent transportation system application. A "service requirement" may include an application requirement corresponding to the service, for example, a volume of to-be-transmitted data, a time window corresponding to the to-be-transmitted data, a time limit on interaction between devices during transmission of the to-be-transmitted data, and a level of automation (Level of Autonomous, LoA) of a V2X service. The "service requirement" may further include a communication requirement corresponding to the service, for example, a communication QoS requirement, including but not limited to a resource type, a priority, a transmission delay, a packet loss rate, a throughput, and the like. This is not limited in the embodiments of this application. Generally, there is a correspondence between application requirements and communication requirements. The LoA and QoS are used as an example. A correspondence between LoAs and QoS may be understood as that each level of automation corresponds to a group of communication QoS requirements.

Both "a service requirement supported by the communication quality" and "a service requirement adapted to the communication quality" may be understood as that the communication quality can meet data transmission of the service and can meet the service requirement of the service. In the embodiments of this application, when a difference between "a service requirement supported by the communication quality" and "a service requirement adapted to the communication quality" is not emphasized, meanings to be expressed by "a service requirement supported by the communication quality" and "a service requirement adapted to the communication quality" are consistent.

In the embodiments of this application, "the communication quality of the Uu interface meets a service requirement of the target data" may be understood as that when the terminal device transmits the target data by using the Uu interface, communication quality of the Uu interface can meet the service requirement of the target data, or may be understood as that to meet the service requirement of the target data, the terminal device may transmit the target data in the Uu interface communication mode. "The communication quality of the PC5 interface meets the service requirement of the target data" may be understood as that when the terminal device transmits the target data by using the PC5 interface, communication quality of the PC5 interface can meet the service requirement of the target data, or may be understood as that to meet the service requirement of the target data, the terminal device may transmit the target data in the PC5 interface communication mode.

A "protocol" in the embodiments of this application may be a standard protocol in the communications field, for example, may include an NR protocol, and a related protocol applied to a future communications system. This is not limited in this application.

In the embodiments of this application, "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least one of A and B", similar to "A and/or B", describes an association relationship between associated objects and represents that three relationships may exist. For example, at least one of A and B may represent the following three cases: Only A exists, both A and B exist, and only B exists.

In the embodiments of this application, "a plurality of' means two or more, and another quantifier is similar to "a plurality of'. "And/or" describes the association relationship between the associated objects and represents that three relationships may exist. For example, A and/or B may represent the following three cases: Only A exists, both A and B exist, and only B exists.

The solutions provided in this application may be applicable to a process in which the terminal device switches between a plurality of communication modes, or may be applicable to a process in which the terminal device determines the communication mode. In the following embodiments, for brevity, a mode in which communication is performed over the PC5 interface and the Uu interface is referred to as the multipath communication mode for short, a mode in which communication is performed by using only the Uu interface technology is referred to as the Uu interface communication mode for short, and a mode in which communication is performed by using only the PC5 interface technology is referred to as the PC5 interface communication mode for short.

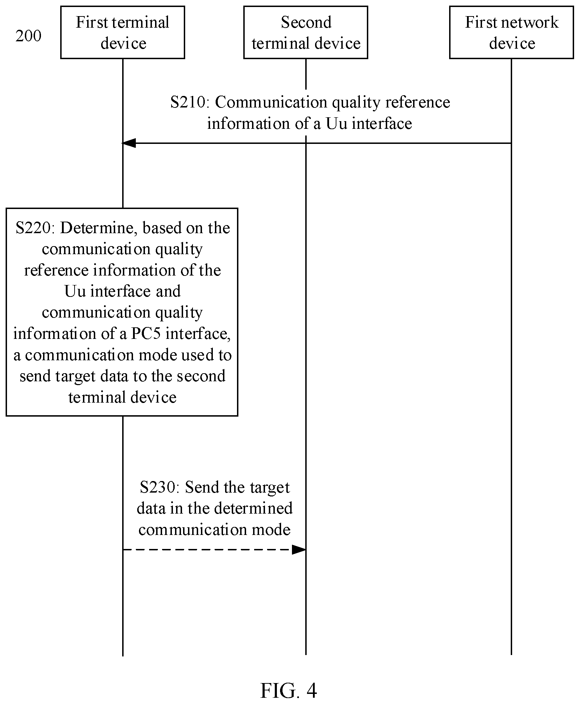

FIG. 4 is a schematic flowchart of a communication method 200 according to an embodiment of this application. As shown in FIG. 4, the method 200 is described as follows.

S210: A first terminal device receives communication quality reference information of a Uu interface from a first network device.

Correspondingly, the first network device obtains the communication quality reference information of the Uu interface, and sends the communication quality reference information of the Uu interface to the first terminal device.

The first terminal device may be any terminal device, for example, the terminal device in FIG. 1 or FIG. 2.

The first network device may be a server, for example, a V2X server or a VAE server.

Optionally, the communication quality reference information of the Uu interface includes communication quality information of a Uu interface of the first terminal device and/or communication quality information of a Uu interface of a second terminal device; or indication information, where the indication information is used to indicate whether communication quality of the Uu interface meets a service requirement of target data, and the Uu interface includes a Uu interface of the first terminal device and/or a Uu interface of a second terminal device.

The first terminal device is a transmit end of the target data, and the second terminal device is a receive end of the target data. The second terminal device may be specifically one or more terminal devices, second terminal devices may be one or more terminal device groups, or second terminal devices may be one or more groups. For example, all terminal devices in the terminal device group or the group receive the target data from the first terminal device.

The target data may be data (which may include data, a voice, a video, a V2X message, and the like) to be transmitted by the first terminal device, or may be specific-type data to be transmitted by the first terminal device, for example, to-be-transmitted data of an automatic driving service or to-be-transmitted data in L3 of an automatic driving service, and for another example, a message (which may be a voice, a video, or a V2X message) of a specific service or application. This is not limited.

The service requirement of the target data may be used to represent a service requirement required for transmitting the target data, and may be specifically a transmission delay, a communication rate, a packet loss rate, or the like that is required for transmitting the target data.

In a possible implementation, the indication information is used to indicate that the communication quality of the Uu interface meets the service requirement of the target data. Specifically, when the communication quality of the Uu interface meets the service requirement of the target data, the indication information is used to indicate that the communication quality of the Uu interface meets the service requirement of the target data. Correspondingly, the first terminal device may determine, based on the indication information, that the communication quality of the Uu interface meets the service requirement of the target data. This is specifically described in the following embodiments.

In another possible implementation, the indication information is used to indicate that the communication quality of the Uu interface does not meet the service requirement of the target data. Specifically, when the communication quality of the Uu interface does not meet the service requirement of the target data, the indication information is used to indicate that the communication quality of the Uu interface does not meet the service requirement of the target data. Correspondingly, the first terminal device may determine, based on the indication information, that the communication quality of the Uu interface does not meet the service requirement of the target data. This is specifically described in the following embodiments.

Optionally, the first terminal device may obtain the communication quality reference information of the Uu interface from the first network device in any one of the following manners.
Manner 1: The first terminal device requests, from the first network device, the communication quality reference information of the Uu interface, and the first network device sends the communication quality reference information of the Uu interface to the first terminal device based on the request.
   The request may be performed for one or more times, or may be performed periodically.
Manner 2: The first network device pushes the communication quality reference information of the Uu interface to the first terminal device.

The push may be performed for one or more times, may be triggered based on an event, or may be performed periodically.

Manner 1 and Manner 2 above are specifically described in the following embodiments.

S220: The first terminal device determines, based on the communication quality reference information of the Uu interface and communication quality information of a PC5 interface, a communication mode used to send the target data to the second terminal device.

That the first terminal device determines, based on the communication quality reference information of the Uu interface and communication quality information of a PC5 interface, a communication mode used to send the target data to the second terminal device may be further understood as that the first terminal device obtains the communication quality of the Uu interface based on the communication quality reference information of the Uu interface, obtains communication quality of the PC5 interface based on the communication quality information of the PC5 interface, and determines, based on the communication quality of the Uu interface and the communication quality of the PC5 interface, the communication mode used to send the target data to the second terminal device.

For example, the communication quality information of the PC5 interface that is obtained by the first terminal device by using a measurement parameter of a lower-layer communication channel of the PC5 interface may include communication quality information sent in an uplink of the PC5 interface and communication quality information received in a downlink of the PC5 interface.

For example, when the first terminal device communicates with the second terminal device, the first terminal device may obtain, based on feedback information of the second terminal device on the PC5 interface, the communication quality information of the PC5 interface on which the second terminal device receives data.

The communication quality information of the PC5 interface may be obtained by the first terminal device by measuring current communication quality of the PC5 interface of the first terminal device. For example, when no data is transmitted on the PC5 interface between the first terminal device and the second terminal device, the first terminal device may obtain current communication quality information of the PC5 interface by measuring quality of a testing signal received on the PC5 interface of the first terminal device from the second terminal device. For another example, when the first terminal device performs communication in a PC5 interface communication mode or a multipath communication mode, the first terminal device may obtain current communication quality of the PC5 interface by measuring quality of a signal received on the PC5 interface of the first terminal device from the second terminal device and used to carry data. Alternatively, the communication quality information of the PC5 interface may be predicted based on communication quality information of the PC5 interface of the first terminal device in a historical communication process (for example, a previous communication process). This is not limited in the embodiments of this application.

It should be noted that, determining the communication mode used to send the target data to the second terminal device in step S220 may be replaced with: determining the communication mode used to send the target data to the second terminal device, determining whether to switch a communication mode, determining an interface on which the target data is transmitted, or determining a communications interface used to send the target data to the second terminal device. This is not limited in this application. The following is all represented by using the determining the communication mode used to send the target data to the second terminal device.

The communication mode may also be referred to as a transmission mode, and does not limit the protection scope of the embodiments of this application. The communication mode is used to represent a mode used when the first terminal device transmits data to the second terminal device.

The communication modes may include the PC5 interface communication mode, a Uu interface communication mode, and the multipath communication mode.

Specifically, the PC5 interface communication mode may represent that the first terminal device sends and/or receives data only over the PC5 interface. The Uu interface communication mode may represent that the first terminal device sends and/or receives data only over the Uu interface. The multipath communication mode may represent that the first terminal device sends and/or receives data over both the PC5 interface and the Uu interface.

It should be noted that, the multipath communication mode represents that when the first terminal device communicates with the second terminal device, the first terminal device sends the target data to the second terminal device in the PC5 interface communication mode, and also sends the target data to the second terminal device in the Uu interface communication mode. The multipath communication mode may also be referred to as a multiflow communication mode, a dual-flow communication mode, a dual-path communication mode, or the like. It should be understood that, the multipath communication mode is merely a name, and does not limit the protection scope of the embodiments of this application.

Step 220 may be implemented in the following manners.

In a first possible implementation, the first terminal device determines, based on the communication quality reference information of the Uu interface and the communication quality information of the PC5 interface, a communication mode in which communication quality is better, as the communication mode used to send the target data to the second terminal device.

The communication quality reference information of the Uu interface includes the communication quality information of the Uu interface of the first terminal device and/or the communication quality information of the Uu interface of the second terminal device.

For example, when the communication quality of the PC5 interface is better than the communication quality of the Uu interface, the first terminal device may send the target data to the second terminal device in the PC5 interface communication mode.

For another example, when the communication quality of the Uu interface is better than the communication quality of the PC5 interface, the first terminal device may send the target data to the second terminal device in the Uu interface communication mode.

For another example, when both the communication quality of the Uu interface and the communication quality of the PC5 interface are poor (to be specific, both are lower than a preset threshold), the first terminal device may send the target data to the second terminal device in the PC5 interface communication mode. Alternatively, the first terminal device sends the target data to the second terminal device in the multipath communication mode.

It should be understood that, a manner of determining whether communication quality is good or poor is not limited in this application. For example, whether the communication quality is good or poor may be determined by determining transmission delays of the PC5 interface and the Uu interface. When a transmission delay of the PC5 interface is shorter than a transmission delay of the Uu interface, it may be determined that the communication quality of the PC5 interface is better than the communication quality of the Uu interface. It is clear that whether the communication quality is good or poor may alternatively be determined in a manner in the prior art.

In a second possible implementation, the first terminal device determines, based on the communication quality reference information of the Uu interface and the communication quality information of the PC5 interface, a communication mode in which communication quality meets a preset condition, as the communication mode used to send the target data to the second terminal device.

Specifically, the first terminal device determines, based on the communication quality reference information of the Uu interface and the communication quality information of the PC5 interface, whether the communication quality of the PC5 interface or the communication quality of the Uu interface meets the preset condition.

For example, if the communication quality of the PC5 interface meets the preset condition, and the communication quality of the Uu interface does not meet the preset condition, the first terminal device sends the target data to the second terminal device in the PC5 interface communication mode.

For another example, if the communication quality of the PC5 interface does not meet the preset condition, and the communication quality of the Uu interface meets the preset condition, the first terminal device may send the target data to the second terminal device in the Uu interface communication mode.

For still another example, if the communication quality of the PC5 interface meets the preset condition, and the communication quality of the Uu interface meets the preset condition, the first terminal device sends the target data to the second terminal device in the multipath communication mode. The preset condition may be determined based on the historical communication process (for example, the previous communication process) of the first terminal device, or may be predefined. This is not limited.

In a third possible implementation, the first terminal device determines, based on the communication quality reference information of the Uu interface, the communication quality information of the PC5 interface, and the service requirement of the target data, the communication mode used to send the target data to the second terminal device.

In an example, as described above, the communication quality reference information of the Uu interface includes the indication information. The third possible implementation may specifically include: determining, by the first terminal device based on the communication quality information of the PC5 interface, that the communication quality of the PC5 interface does not meet the service requirement of the target data; and when the indication information is used to indicate that the communication quality of the Uu interface meets the service requirement of the target data, determining, by the first terminal device, that the communication mode used to send the target data to the second terminal device is the Uu interface communication mode; when the indication information is used to indicate that the communication quality of the Uu interface does not meet the service requirement of the target data, determining, by the first terminal device, that the communication mode used to send the target data to the second terminal device is the PC5 interface communication mode; or when the indication information is used to indicate that the communication quality of the Uu interface does not meet the service requirement of the target data, determining, by the first terminal device, that the communication mode used to send the target data to the second terminal device is the multipath communication mode.

In another example, as described above, the communication quality reference information of the Uu interface includes the indication information. The third possible implementation may specifically include: when the indication information is used to indicate that the communication quality of the Uu interface does not meet the service requirement of the target data, and the first terminal device determines, based on the communication quality information of the PC5 interface, that the communication quality of the PC5 interface meets the service requirement of the target data, determining, by the first terminal device, that the communication mode used to send the target data to the second terminal device is the PC5 interface communication mode, or determining, by the first terminal device, that the communication mode used to send the target data to the second terminal device is the multipath communication mode.

In another example, as described above, the communication quality reference information of the Uu interface includes the indication information. The third possible implementation may specifically include: when the indication information is used to indicate that the communication quality of the Uu interface does not meet the service requirement of the target data, and the first terminal device determines, based on the communication quality information of the PC5 interface, that the communication quality of the PC5 interface does not meet the service requirement of the target data, determining, by the first terminal device, that the communication mode used to send the target data to the second terminal device is the Uu interface communication mode, or determining, by the first terminal device, that the communication mode used to send the target data to the second terminal device is the multipath communication mode.

In another example, as described above, the communication quality reference information of the Uu interface includes the indication information. The third possible implementation may specifically include: when the indication information is used to indicate that the communication quality of the Uu interface meets the service requirement of the target data, if the first terminal device determines, based on the communication quality information of the PC5 interface, that the communication quality of the PC5 interface meets the service requirement of the target data, determining, by the first terminal device, that the communication mode used to send the target data to the second terminal device is one of the PC5 interface communication mode, the Uu interface communication mode, or the multipath communication mode. Optionally, the first terminal device may select the PC5 interface communication mode based on a preference setting of preferentially selecting the PC5 interface communication mode, or selects the multipath communication mode based on a reliability-first preference setting.

Based on the foregoing technical solution, the first terminal device comprehensively considers communication quality of various communications interfaces to determine the communication mode for transmitting the target data, to be specific, determines, based on the communication quality information of the PC5 interface and the communication quality reference information of the Uu interface, the communication mode used to transmit the data, thereby dynamically adjusting, in consideration of changes in the communication quality of the communications interfaces, the communication mode for transmitting the data. For example, when the communication quality of the Uu interface deteriorates or is poor, the first terminal device may determine, based on the communication quality information of the PC5 interface and the communication quality reference information of the Uu interface that are obtained, to transmit the target data in the PC5 interface communication mode. For another example, when the communication quality of the PC5 interface deteriorates or is poor, the first terminal device may determine, based on the communication quality information of the PC5 interface and the communication quality reference information of the Uu interface that are obtained, to transmit the target data in the Uu interface communication mode. For another example, when both the communication quality of the PC5 interface and the communication quality of the Uu interface are poor, the first terminal device may determine, based on the communication quality information of the PC5 interface and the communication quality reference information of the Uu interface that are obtained, to transmit the target data in the multipath communication mode, to ensure data transmission performance and improve user experience. According to this application, the first terminal device can comprehensively consider the communication quality of the various communications interfaces, for example, consider which communications interface has better communication quality, has communication quality meeting the preset condition, or has communication quality meeting a requirement of the target data, and can determine a more appropriate communication mode based on an actual communication status, to better transmit the target data and improve the data transmission performance.

Optionally, when the communication mode determined by the first terminal device is the PC5 interface communication mode, the method further includes: sending, by the first terminal device, a communication mode indication message to the first network device, where the communication mode indication message is used to indicate that the first terminal device performs communication in the PC5 interface communication mode.

Correspondingly, after the first network device receives the communication mode indication message, the first network device may further release a communication resource on the Uu interface of the first terminal device, or the first network device stops sending data to the first terminal device over the Uu interface.

Optionally, the method further includes: receiving, by the first terminal device, a service requirement that is adapted to the communication quality of the Uu interface and that is from the first network device; and updating, by the first terminal device, the service requirement of the target data based on the service requirement adapted to the communication quality of the Uu interface.

For example, when determining that the communication quality of the Uu interface does not meet the service requirement of the target data, the first network device may send, to the first terminal device, the service requirement adapted to the communication quality of the Uu interface. When the first terminal device determines that neither the communication quality of the Uu interface nor the communication quality of the PC5 interface meets the service requirement of the target data, the first terminal device may update, based on the service requirement of the target data, a service requirement for transmitting data.

Adapted service requirements represent service requirements that the communication quality of the Uu interface may meet or service requirements that the communication quality of the Uu interface can support. For differentiation, the adapted service requirement is denoted as an adapted service requirement, the service requirement corresponding to the target data is denoted as a target service requirement or an expected service requirement. For brevity below, only the target service requirement is used for representation. It should be understood that, the target service requirement (or the expected service requirement) and the adapted service requirement are merely names for differentiation, and the names of the requirements do not limit the protection scope of the embodiments of this application.

Automatic driving is used as an example. Levels of automation are usually classified into L0, L1, L2, L3, L4, and L5. It is assumed that to-be-transmitted data of the first terminal device and the second terminal device is data in L3 of an automatic driving service. If the first terminal device determines that neither the communication quality of the Uu interface nor the communication quality of the PC5 interface meets a service requirement of the data in L3 of the automatic driving service, the first terminal device may update the service requirement. To be specific, the first terminal device transmits data in L2 of the automatic driving service or data in L1 of the automatic driving service to the second terminal device. The first terminal device may transmit the data in L2 of the automatic driving service or the data in L1 of the automatic driving service in the PC5 interface communication mode. Alternatively, the first terminal device may transmit the data in L2 of the automatic driving service or the data in L1 of the automatic driving service in the Uu interface communication mode. Alternatively, the first terminal device may determine a communication mode based on the communication quality reference information of the Uu interface and the communication quality information of the PC5 interface. Alternatively, the first terminal device may directly use a current communication mode.

It should be understood that, after the first terminal device reduces a service requirement, transmitted data may be the same as original data to be transmitted, but the service requirement for transmitting the data is reduced. Alternatively, transmitted data may be different from original data to be transmitted. For example, some parameters may not be transmitted. This is not limited in the embodiments of this application. For example, in the foregoing specific example, the data that is in L3 of the automatic driving service and that is transmitted by the first terminal device to the second terminal device may be the same as or different from the data that is in L2 or L1 of the automatic driving service and that is transmitted by the first terminal device to the second terminal device.

Optionally, the method 200 further includes step 230.

S230: The first terminal device sends the target data to the second terminal device in the determined communication mode.

For example, when the target data needs to be transmitted, the first terminal device may transmit the target data in the communication mode determined in S220. In other words, the first terminal device sends the target data to the second terminal device in the communication mode determined in S220.

For example, if the first terminal device determines that the communication mode is the PC5 interface communication mode, the first terminal device sends the target data to the second terminal device only over the PC5 interface. For another example, if the first terminal device determines that the communication mode is the Uu interface communication mode, the first terminal device sends the target data to the second terminal device only over the Uu interface. For another example, if the first terminal device determines that the communication mode is the multipath communication mode, the first terminal device sends the target data to the second terminal device over both the PC5 interface and the Uu interface.

It should be understood that, the first terminal device may communicate with a plurality of terminal devices in one or more communication modes. This is not limited in the embodiments of this application. For example, when the first terminal device communicates with the second terminal device in the Uu interface communication mode, the first terminal device may communicate with another terminal device in the PC5 interface communication mode, the Uu interface communication mode, or the multipath communication mode.

It should be further understood that, the first terminal device may transmit different data to the second terminal device in one or more communication modes. This is not limited in the embodiments of this application. For example, when the first terminal device sends the target data to the second terminal device in the Uu interface communication mode, the first terminal device may send other data to the second terminal device in the PC5 interface communication mode, the Uu interface communication mode, or the multipath communication mode.

The following describes Manner 1 and Manner 2 above in detail.

Manner 1: The first terminal device requests, from the first network device, the communication quality reference information of the Uu interface. Correspondingly, the first network device sends the communication quality reference information of the Uu interface to the first terminal device based on the request.

That the first terminal device requests, from the first network device, the communication quality reference information of the Uu interface in Manner 1 may be performed in the following cases:
Case 1: A current communications interface of the first terminal device includes the PC5 interface.
Case 2: A current communication mode of the first terminal device is the PC5 interface communication mode or the multipath communication mode, and the first terminal device detects that the communication quality of the PC5 interface does not meet the service requirement of the target data.
Case 3: The first terminal device detects that the communication quality of the PC5 interface deteriorates or is less than a preset threshold.

In addition, that the first terminal device requests, from the first network device, the communication quality reference information of the Uu interface in Manner 1 may be implemented by sending, by the first terminal device, a request message to the first network device. The request message is used to request the communication quality reference information of the Uu interface. The request message may include at least one of the following: identity information of the second terminal device, identifier information of the target data, the service requirement of the target data (namely, the target service requirement), identity information of the first terminal device, a target area of the target data, or the like.

Correspondingly, the first network device receives the request message, and sends the communication quality reference information of the Uu interface to the first terminal device based on the request message.

The identity information of the first terminal device may be a 3GPP subscriber subscription identity such as an IMSI or a TMSI, or may be a client identity or an application service user identity of an application client on the first terminal device.

An identifier of the target data may be indicated by using identifier information of a service to which the target data belongs. For example, if the target data belongs to a V2X application, the identifier information of the target data may include a V2X application identifier. For another example, if the target data belongs to a V2X application layer session, the identifier information of the target data may include an identifier of a session initiation protocol (session initiation protocol, SIP) session. If the target data belongs to a V2X service, the identifier information of the target data may include a V2X service provider service identifier (provider service identifier, PSID), an intelligent transportation systems application identifier (intelligent transport systems application identifier, ITS-AID), or the like.

The target area of the target data is a corresponding area to which the target data is to be transmitted, for example, an area to which the target data is to be transmitted and that may be requested when the target data is transmitted in a Uu broadcast manner. A specific form of the area may be a communications network area (for example, the communications network area may be referred to as a communications area, a service area, or a session area), for example, a cell (cell) list, a tracking area (tracking area, TA) list, or a service area (service area, SA) list, or may be an administrative region, a geographical location area such as latitude and longitude, or the like.

When the second terminal device is one or more terminal devices corresponding to the target data, the identity information of the second terminal device may include identity information of the one or more terminal devices, for example, an IMSI or a TMSI, and for another example, a client identity or an application service user identity of an application client on the second terminal device. Alternatively, when second terminal devices are a terminal device group or a group receiving the target data, identity information of the second terminal devices may include group identity information of the terminal device group or the group.

For example, the request message includes the identity information of the second terminal device. The first network device may obtain the communication quality information of the Uu interface of the second terminal device based on the identity information of the second terminal device, and send the communication quality information of the Uu interface of the second terminal device to the first terminal device. Correspondingly, the communication quality reference information of the Uu interface that is received by the first terminal device includes the communication quality information of the Uu interface of the second terminal device.

For another example, the request message includes the identity information of the first terminal device. The first network device obtains the communication quality information of the Uu interface of the first terminal device based on the identity information of the first terminal device, and sends the communication quality information of the Uu interface of the first terminal device to the first terminal device. Correspondingly, the communication quality reference information of the Uu interface that is received by the first terminal device includes the communication quality information of the Uu interface of the first terminal device.

For another example, when second terminal devices are a group of terminal devices or a broadcast area, if downlink target data needs to be sent in the Uu broadcast manner, the first network device sends Uu broadcast communication quality information to the first terminal device. Correspondingly, the communication quality reference information of the Uu interface that is received by the first terminal device includes the Uu broadcast communication quality information. The Uu broadcast communication quality information may be used to represent communication quality of Uu interface broadcast communication of the second terminal device.

For another example, the request message includes the identifier information of the target data. The first network device may determine, based on the identifier information of the target data, the service requirement corresponding to the target data, and determine whether the communication quality of the Uu interface meets the service requirement of the target data. It is assumed that the first network device determines that the communication quality of the Uu interface meets the service requirement of the target data. In this case, the first network device may send, to the first terminal device, the indication information indicating that the communication quality of the Uu interface meets the service requirement of the target data. Correspondingly, the communication quality reference information of the Uu interface that is received by the first terminal device includes the indication information. The indication information is used to indicate that the communication quality of the Uu interface meets the service requirement of the target data. In addition, it is assumed that the first network device determines that the communication quality of the Uu interface does not meet the service requirement of the target data. In this case, the first network device may send, to the first terminal device, the indication information indicating that the communication quality of the Uu interface does not meet the service requirement of the target data. Correspondingly, the communication quality reference information of the Uu interface that is received by the first terminal device includes the indication information. The indication information is used to indicate that the communication quality of the Uu interface does not meet the service requirement of the target data.

For another example, the request message includes the service requirement of the target data, namely, the target service requirement, where the service requirement is used to represent the service requirement corresponding to the target data. It is assumed that the first network device determines that the communication quality of the Uu interface meets the service requirement of the target data. In this case, the first network device sends the communication quality reference information of the Uu interface to the first terminal device. The communication quality reference information of the Uu interface is indication information used to indicate that the communication quality of the Uu interface meets the service requirement of the target data. Correspondingly, the communication quality reference information of the Uu interface that is received by the first terminal device includes the indication information. In addition, it is assumed that the first network device determines that the communication quality of the Uu interface does not meet the service requirement of the target data. In this case, the first network device sends the communication quality reference information of the Uu interface to the first terminal device. The communication quality reference information of the Uu interface is indication information used to indicate that the communication quality of the Uu interface does not meet the service requirement of the target data. Correspondingly, the communication quality reference information of the Uu interface that is received by the first terminal device includes the indication information.

Optionally, the method further includes: determining, by the first network device based on the request message, whether communication quality of the Uu interface meets the service requirement of the target data. The communication quality reference information of the Uu interface that is sent by the first network device to the first terminal device includes the indication information. The indication information is used to indicate whether the communication quality of the Uu interface meets the service requirement of the target data.

For example, the first network device may determine, based on the communication quality of the Uu interface and a service requirement of the first terminal device, whether the communication quality of the Uu interface meets the service requirement of the first terminal device. Automatic driving is used as an example. The levels of automation are usually classified into L0, L1, L2, L3, L4, and L5. An application requirement corresponding to a service of the first terminal device is L3 of the automatic driving service. It is assumed that QoS is used to represent a communication requirement on the Uu interface, and indicators of the QoS may include availability, a throughput, a delay, a delay variation (for example, jitter and drift), a loss, and the like. Table 1 shows service requirements corresponding to different tasks.

**Table 1**

| Application requirements corresponding to services | QoS used to represent communication requirements corresponding to the services |
|---|---|
| L0 | A0 |
| L1 | A1 |
| L2 | A2 |
| L3 | A3 |
| L4 | A4 |
| L5 | A5 |

A0 represents QoS expected when a level of automation is L0. In other words, QoS expected when the first terminal device transmits data in L0 of the automatic driving service is A0. A1 represents QoS expected when a level of automation is L1. In other words, QoS expected when the first terminal device transmits the data in L1 of the automatic driving service is A1. A2 represents QoS expected when a level of automation is L2. In other words, QoS expected when the first terminal device transmits the data in L2 of the automatic driving service is A2. A3 represents QoS expected when a level of automation is L3. In other words, QoS expected when the first terminal device transmits the data in L3 of the automatic driving service is A3. A4 represents QoS expected when a level of automation is L4. In other words, QoS expected when the first terminal device transmits data in L4 of the automatic driving service is A4. A5 represents QoS expected when a level of automation is L5. In other words, QoS expected when the first terminal device transmits data in L5 of the automatic driving service is A5. Table 1 may show a correspondence prestored by the first network device.

A0, A1, A2, A3, A4, or A5 may be an indicator comprehensively determined after one or more or all factors in the availability, the throughput, the delay, the delay variation, and the loss are considered, or may be an indicator determined by considering any one of factors such as the availability, the throughput, the delay, the delay variation, and the packet loss rate. This is not limited in the embodiments of this application.

The communication quality of the Uu interface may be represented by using a QoS metric, and the QoS metric may include the availability, the throughput, the delay, the delay variation (for example, jitter and drift), the packet loss rate, and the like. For example, if the first network device determines that a QoS metric of the Uu interface of the first terminal device meets A0, it indicates that the communication quality of the Uu interface meets a service requirement in L0 of the automatic driving service. To be specific, the first terminal device may transmit the data in L0 of the automatic driving service in the Uu interface communication mode.

Optionally, the communication quality reference information of the Uu interface that is sent by the first network device to the first terminal device includes indication information. The indication information may be used to indicate that the communication quality of the Uu interface meets the service requirement in L0 of the automatic driving service of the first terminal device.

For another example, if the first network device determines that a QoS metric of the Uu interface of the first terminal device meets A1, it indicates that the communication quality of the Uu interface meets a service requirement in L1 of the automatic driving service. To be specific, the first terminal device may transmit the data in L1 of the automatic driving service in the Uu interface communication mode.

Optionally, the communication quality reference information of the Uu interface that is sent by the first network device to the first terminal device includes indication information. The indication information may be used to indicate that the communication quality of the Uu interface meets the service requirement in L1 of the automatic driving service of the first terminal device.

It should be understood that, that the communication quality of the Uu interface meets the service requirement of the service of the first terminal device represents that when the first terminal device transmits data of the service by using the Uu interface, the communication quality of the Uu interface can meet a service requirement of the data. In other words, the first terminal device may transmit the data of the service in the Uu interface communication mode, and the service requirement is met. For example, that the communication quality of the Uu interface meets the service requirement in L0 of the automatic driving service of the first terminal device may be understood as that the first terminal device may transmit the data in L0 of the automatic driving service over the Uu interface, or may be understood as that to meet L0 of the automatic driving service, the first terminal device may transmit data of the automatic driving service over the Uu interface.

It should be further understood that, using the QoS metric to represent the communication quality of the Uu interface is merely an example for description. This application is not limited thereto. Any manner of representing the communication quality of the Uu interface falls within the protection scope of this application. In addition, the QoS metric is merely a name, and does not limit the protection scope of the embodiments of this application.

Based on Manner 1, the first terminal device may request, from the first network device, the communication quality reference information of the Uu interface when required, so that unnecessary signaling overheads can be reduced, and resources can be saved.

Manner 2: The first network device pushes the communication quality reference information of the Uu interface to the first terminal device.

In a possible implementation, the first network device may be triggered, based on the event, for example, in a manner of event subscription, to send the communication quality reference information of the Uu interface to the first terminal device. For example, if the current communication mode of the first terminal device is the Uu interface communication mode or the multipath communication mode, when the first network device detects that communication quality of the Uu interface of the first terminal device deteriorates, the first network device may deliver the communication quality reference information of the Uu interface to the first terminal device.

In another possible implementation, the first network device periodically sends the communication quality reference information of the Uu interface to the first terminal device. The periodicity may be predefined, and may be preconfigured in the first terminal device or the first network device. For example, when the first network device periodically detects the communication quality of the Uu interface, the first network device may actively and periodically send the communication quality reference information of the Uu interface to the first terminal device. Correspondingly, the first terminal device periodically obtains the communication quality reference information of the Uu interface from the first network device, so that the first terminal device can learn of the communication quality of the Uu interface in time or switch a communication mode in time, and select an appropriate communication mode, to ensure transmission performance.

The communication quality reference information of the Uu interface is similar to the communication quality reference information of the Uu interface in Manner 1. For brevity, details are not described herein again. The method for determining, by the first network device, whether the communication quality of the Uu interface meets the service requirement of the target data is described in detail in Manner 1. For brevity, details are not described herein again.

Based on Manner 2, the first network device may be triggered, based on the event, to push the communication quality reference information of the Uu interface to the first terminal device or periodically push the communication quality reference information of the Uu interface to the first terminal device, so that the first terminal device can learn of the communication quality of the Uu interface in time or switch the communication mode in time, and select the appropriate communication mode, to ensure transmission performance.

The foregoing describes only the two manners, in examples, in which the first terminal device may obtain the communication quality reference information of the Uu interface. The embodiments of this application are not limited thereto. Any manner in which the first terminal device can obtain the communication quality reference information of the Uu interface falls within the protection scope of the embodiments of this application.

It should be noted that, in this embodiment of this application, "the PC5 interface communication mode" may be replaced with "performing communication only over the PC5 interface", "the Uu interface communication mode" may be replaced with "performing communication only over the Uu interface", and "the multipath interface communication mode" may be replaced with "performing communication over both the PC5 interface and the Uu interface".

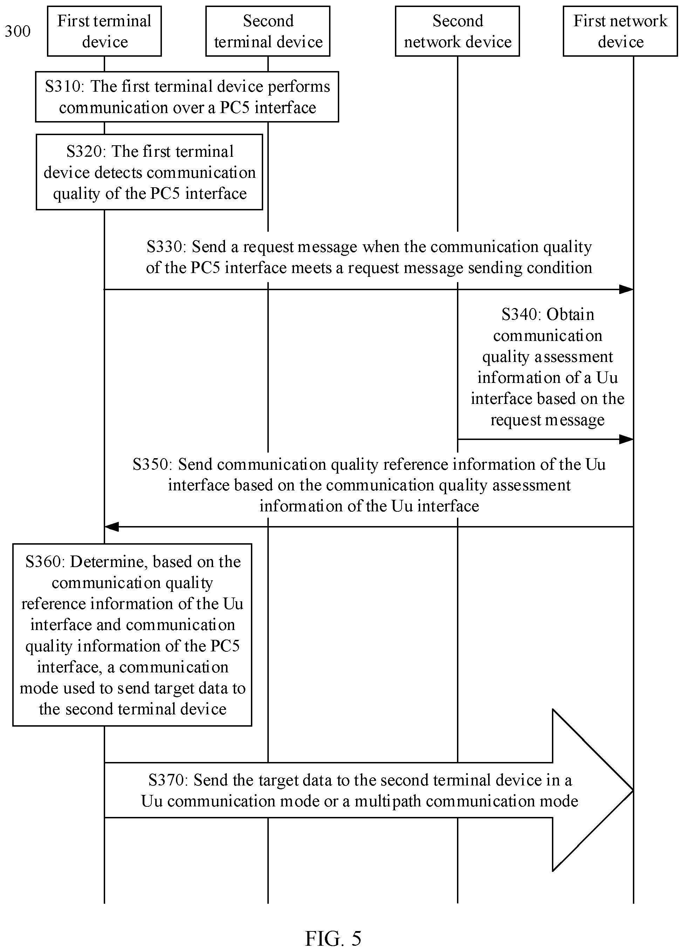

FIG. 5 is a schematic flowchart of a communication method 300 according to another embodiment of this application. As shown in FIG. 5, the method 300 is described as follows. The method provided in this embodiment of this application may be applied to a scenario in which a first terminal device communicates with a second terminal device in a PC5 interface communication mode or a multipath communication mode. This is not limited.

S310: The first terminal device communicates with the second terminal device over a PC5 interface.

For the second terminal device, refer to the related descriptions in the foregoing embodiment. Details are not described again.

S320: The first terminal device detects communication quality of the PC5 interface.

For example, the first terminal device or a VAE client (client) on the first terminal device detects communication quality of the PC5 interface. Specifically, the VAE client may obtain communication quality information of the PC5 interface by using a bottom-layer communication module of the first terminal device, and obtain the communication quality of the PC5 interface based on the communication quality information of the PC5 interface.

Optionally, the first terminal device may periodically detect the communication quality of the PC5 interface.

A manner in which the first terminal device detects the communication quality of the PC5 interface is similar to that in the prior art. For brevity, details are not described herein again.

S330: When the communication quality of the PC5 interface meets a request message sending condition, the first terminal device sends a request message to a first network device.

The request message sending condition includes: The communication quality of the PC5 interface deteriorates, the communication quality of the PC5 interface is lower than a preset threshold (in other words, communication quality is poor), for example, a packet loss rate of the PC5 interface is higher than a first threshold, or the communication quality of the PC5 interface does not meet a service requirement of target data.

The communication quality of the PC5 interface may deteriorate due to congestion, overload, or the like. This is not limited.

The request message may be used to request communication quality reference information of a Uu interface, or may be used to request the first network device to determine whether communication quality of the Uu interface meets the service requirement of the target data.

The communication quality reference information of the Uu interface includes indication information. The indication information is used to indicate whether the communication quality of the Uu interface meets the service requirement of the target data.

The first network device may be a server such as a V2X server (V2X server) or a VAE server (VAE server), or may be another network device that may be configured to implement a same or similar function. This is not limited.

For example, when the communication quality of the PC5 interface is poor or the communication quality deteriorates, the first terminal device sends a request message to the first network device, or the first terminal device sends a request message to the first network device by using the VAE client. The request message is used to request the communication quality reference information of the Uu interface or request the first network device to determine whether the communication quality of the Uu interface meets the service requirement of the target data or a service requirement of a service. The target data represents to-be-transmitted data. Refer to the descriptions in the method 200. The service may be a currently ongoing service, or may be a service to be performed by the first terminal device.

The request message may be specifically a Uu capability query request (Uu interface capability query request) message, or may be a message of a switch request (switch PC5 to Uu request) for switching the PC5 interface communication mode to a Uu interface communication mode.

It should be understood that, the request message, the Uu capability query request message, or the switch request message is named for ease of description. A name of the request message is not limited in the embodiments of this application, and the name does not limit the protection scope of the embodiments of this application. The following uses the request message for representation.

Optionally, the request message includes at least one of the following: identity information of the second terminal device, identifier information of the target data, the service requirement of the target data (which may also be referred to as an expected service requirement or a target service requirement), identity information of the first terminal device, a target area of the target data, or the like.

It should be noted that, for nouns, terms, and the like in this embodiment of this application, refer to the foregoing related descriptions. For example, for the request message, the identity information of the second terminal device, the identifier information of the target data, the service requirement of the target data, and the communication quality, refer to the foregoing related descriptions. Details are not described again.

S340: The first network device obtains communication quality assessment information of the Uu interface from a second network device based on the request message.

Optionally, the communication quality assessment information of the Uu interface includes: communication quality information of a Uu interface of the first terminal device and/or communication quality information of a Uu interface of the second terminal device.

Optionally, the communication quality information of the Uu interface of the second terminal device may include Uu broadcast communication quality information. For example, when second terminal devices are a group of terminal devices or a broadcast area, if downlink target data is sent in a Uu broadcast manner, the first network device sends the Uu broadcast communication quality information to the first terminal device. The Uu broadcast communication quality information may be used to represent communication quality of Uu interface broadcast communication of the second terminal device.

The second network device may be an EPS/a 5GS, or may be another network element that may be configured to implement a same or similar function. This is not limited.

It should be noted that, the first network device may alternatively obtain the communication quality assessment information of the Uu interface from another device. This is not limited.

For example, after receiving the request message sent by the first terminal device, the first network device may obtain the communication quality assessment information of the Uu interface from the second network device based on the request message.

S350: The first network device sends the communication quality reference information of the Uu interface to the first terminal device based on the communication quality assessment information of the Uu interface.

The communication quality reference information of the Uu interface includes the indication information. Refer to the related descriptions in S330.

For example, the first network device determines, based on the service requirement of the target data that is in the request message received in S330 and the communication quality assessment information of the Uu interface that is obtained in S340, whether the communication quality of the Uu interface meets the service requirement of the target data.

For example, the first network device may predict the service requirement of the target data based on a historical communication process (for example, a previous communication process) of the first terminal device, and determine, based on the communication quality assessment information of the Uu interface that is obtained in S340, whether the communication quality of the Uu interface meets the service requirement of the target data.

For example, the first network device may determine, based on a locally stored service requirement of the target data and the communication quality assessment information of the Uu interface that is obtained in S340, whether the communication quality of the Uu interface meets the service requirement of the target data.

A method for determining, by the first network device, whether the communication quality of the Uu interface meets the service requirement of the target data is similar to that described in the foregoing method 200, and details are not described again.

For example, the request message includes that a target service requirement or an expected service requirement of an automatic driving service is L3 of the automatic driving service. If the first network device determines that the communication quality of the Uu interface does not meet a service requirement in L3 of the automatic driving service, indication information #1 sent by the first network device to the first terminal device is used to indicate that the communication quality of the Uu interface does not meet the expected service requirement in L3 of the automatic driving service.

Optionally, the method further includes: The first network device determines services of the first terminal device, service requirements (namely, adapted service requirements), or the like that are supported by or adapted to the communication quality of the Uu interface; the first network device may send, to the first terminal device, the service requirements adapted to the communication quality of the Uu interface; and the first terminal device updates the service requirement of the target data based on the service requirements adapted to the communication quality of the Uu interface.

For example, the first network device may further determine the service requirement that can be supported by or adapted to the communication quality of the Uu interface. If the communication quality of the Uu interface meets service requirements in L2 and L1 of the automatic driving service, the first network device sends indication information #2 to the first terminal device, where the indication information #2 is used to indicate that the communication quality of the Uu interface meets the service requirements in L2 and L1 of the automatic driving service.

The indication information #1 and the indication information #2 may be used to separately indicate the first terminal device, or may be used to indicate the first terminal device in one piece of signaling. This is not limited. It should be understood that, the indication information #1 and the indication information #2 are merely named for differentiation, and do not limit the protection scope of this application.

The communication quality reference information of the Uu interface that is in step S350 may be carried in a response message for the request message, and the first network device sends the response message for the request message to the first terminal device.

The response message may be a feedback or a response to the request message in S330.

S360: The first terminal device determines, based on the communication quality reference information of the Uu interface and the communication quality information of the PC5 interface, a communication mode used to send the target data to the second terminal device.

It should be noted that, when the first terminal device uses the PC5 interface communication mode, the communication quality information of the PC5 interface may be current communication quality information of the PC5 interface of the first terminal device, or may be historical communication quality information of the PC5 interface of the first terminal device; the communication quality assessment information of the Uu interface may be historical communication quality information of the Uu interface, or may be current communication quality information of the Uu interface, for example, the communication quality information of the Uu interface of the first terminal device and/or the communication quality information of the Uu interface of the second terminal device. The communication quality information of the Uu interface of the first terminal device may be predicted by the first network device based on historical communication quality of the Uu interface of the first terminal device. The communication quality information of the Uu interface of the second terminal device may be predicted by the first network device based on historical communication quality of the Uu interface of the second terminal device.

It should be further noted that, when the first terminal device uses the multipath communication mode, the communication quality information of the PC5 interface may be the current communication quality information of the PC5 interface of the first terminal device, or may be the historical communication quality information of the PC5 interface of the first terminal device; the communication quality assessment information of the Uu interface may be the current communication quality information of the Uu interface, or may be the historical communication quality information of the Uu interface, for example, the communication quality information of the Uu interface of the first terminal device and/or the communication quality information of the Uu interface of the second terminal device. The communication quality information of the Uu interface of the first terminal device may be predicted by the first network device based on the historical communication quality of the Uu interface of the first terminal device, or may be determined by the first network device based on current communication quality of the Uu interface of the first terminal device. The communication quality information of the Uu interface of the second terminal device may be predicted by the first network device based on the historical communication quality of the Uu interface of the second terminal device, or may be obtained by the first network device based on current communication quality of the Uu interface of the second terminal device.

Optionally, the communication quality information of the Uu interface of the second terminal device may include the Uu broadcast communication quality information. Refer to the related descriptions in the foregoing embodiment. Details are not described again.

In a possible implementation, the first terminal device determines, based on the communication quality information of the PC5 interface and the communication quality reference information of the Uu interface, whether to switch to the Uu interface communication mode.

For example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface meets the service requirement of the target data, the first terminal device determines to switch the PC5 interface communication mode or the multipath communication mode to the Uu interface communication mode, to send the target data to the second terminal device. It may be further understood as that, to meet the service requirement of the target data, the first terminal device may send the target data to the second terminal device only over the Uu interface.

For another example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface does not meet the service requirement of the target data, the first terminal device still uses a current communication mode. For example, when the first terminal device uses the PC5 interface communication mode, the first terminal device determines to still use the PC5 interface communication mode to send the target data to the second terminal device. For another example, when the first terminal device uses the multipath communication mode, the first terminal device determines to still use the multipath communication mode to send the target data to the second terminal device.

In another possible implementation, when the first terminal device uses the PC5 interface communication mode, the first terminal device determines, based on the communication quality information of the PC5 interface and the communication quality reference information of the Uu interface, whether to switch to the multipath communication mode.

For example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface meets the service requirement of the target data, the first terminal device switches the PC5 interface communication mode to the multipath communication mode. To be specific, the first terminal device sends the target data to the second terminal device over both the Uu interface and the PC5 interface. It may be further understood as that, to meet the service requirement of the target data, the first terminal device may transmit the target data over the Uu interface, and send the target data to the second terminal device over the PC5 interface.

For another example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface does not meet the service requirement of the target data, the first terminal device may determine, with reference to the communication quality information that is of the Uu interface of the second terminal device and that is in the response message, to send the target data to the second terminal device in the PC5 interface communication mode or the multipath communication mode.

In another possible implementation, when the first terminal device uses the multipath communication mode, the first terminal device determines, based on the communication quality information of the PC5 interface and the communication quality reference information of the Uu interface, whether to switch to the PC5 interface communication mode.

For example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface meets the service requirement of the target data, the first terminal device sends the target data to the second terminal device still in the multipath communication mode. To be specific, the first terminal device sends the target data to the second terminal device over both the Uu interface and the PC5 interface. It may be further understood as that, to meet the service requirement of the target data, the first terminal device may transmit the target data over the Uu interface, and send the target data to the second terminal device over the PC5 interface.

For another example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface does not meet the service requirement of the target data, the first terminal device determines to switch the multipath communication mode to the PC5 interface communication mode, to send the target data to the second terminal device.

In another possible implementation, the first terminal device determines, based on the communication quality information of the PC5 interface and the communication quality reference information of the Uu interface, to send the target data to the second terminal device still in the PC5 interface communication mode or the multipath communication mode.

For example, if the first terminal device determines, based on the communication quality information of the PC5 interface of the first terminal device, that the communication quality of the PC5 interface of the first terminal device does not meet the service requirement of the target data, and determines, based on the received response message, that the communication quality of the Uu interface does not meet the service requirement of the target data, the first terminal device determines to send the target data to the second terminal device still in the PC5 interface communication mode or the multipath communication mode.

It should be understood that, transmitted data may be the same or may be different after the first terminal device updates the service requirement, and this is similar to the method 200. For example, data that is in L2 of the automatic driving service and that is transmitted by the first terminal device may be the same as or different from data that is in L3 of the automatic driving service and that is transmitted by the first terminal device.

It should be further understood that, the foregoing description is merely an example, and this application is not limited thereto. Any method that can enable the first terminal device to determine the communication mode based on the communication quality information of the PC5 interface and the communication quality reference information of the Uu interface falls within the protection scope of this application.

If the first terminal device determines to switch a communication mode, for example, to switch to the Uu interface communication mode or the multipath communication mode, step S370 is performed.

S370: The first terminal device sends the target data to the second terminal device in the Uu interface communication mode or the multipath communication mode.

For example, when the first terminal device determines, based on the communication quality reference information of the Uu interface and the communication quality information of the PC5 interface, to switch the PC5 interface communication mode to the Uu interface communication mode, the first terminal device sends the target data to the second terminal device in the Uu interface communication mode.

For example, when the first terminal device determines, based on the communication quality reference information of the Uu interface and the communication quality information of the PC5 interface, to switch the PC5 interface communication mode to the multipath communication mode, the first terminal device sends the target data to the second terminal device in the multipath communication mode.

It should be understood that, that the first terminal device determines, based on the communication quality reference information of the Uu interface and the communication quality information of the PC5 interface, the communication mode used to send the target data to the second terminal device may be further understood as that the first terminal device obtains the communication quality of the Uu interface based on the communication quality information of the Uu interface, obtains the communication quality of the PC5 interface based on the communication quality information of the PC5 interface, and determines, based on the communication quality of the Uu interface and the communication quality of the PC5 interface, the communication mode used to send the target data to the second terminal device.

It should be noted that, in this embodiment of this application, "the PC5 interface communication mode" may be replaced with "performing communication only over the PC5 interface", "the Uu interface communication mode" may be replaced with "performing communication only over the Uu interface", and "the multipath interface communication mode" may be replaced with "performing communication over both the PC5 interface and the Uu interface".

Based on the foregoing technical solution, when the first terminal device performs communication in the PC5 interface communication mode or the multipath communication mode, the first terminal device may request, from the first network device, the communication quality reference information of the Uu interface when detecting that the communication quality of the PC5 interface of the first terminal device meets the request message sending condition, so that based on the communication quality information of the PC5 interface of the first terminal device and the obtained communication quality reference information of the Uu interface, the first terminal device can determine whether a communication mode needs to be switched, or determine to use a communication mode in which communication quality is better, to transmit data, thereby dynamically adjusting, in comprehensive consideration of changes in communication quality of the communications interfaces, the communication mode for transmitting the data, to determine a more appropriate communication mode to transmit the target data, and improve data transmission performance.

In addition, based on the foregoing technical solution, when the communication quality of the PC5 interface meets the request message sending condition, the first terminal device sends the request message to the first network device. Then, the first network device sends the communication quality reference information of the Uu interface to the first terminal device based on the request message. This reduces unnecessary signaling overheads, and also reduces load of the first network device.

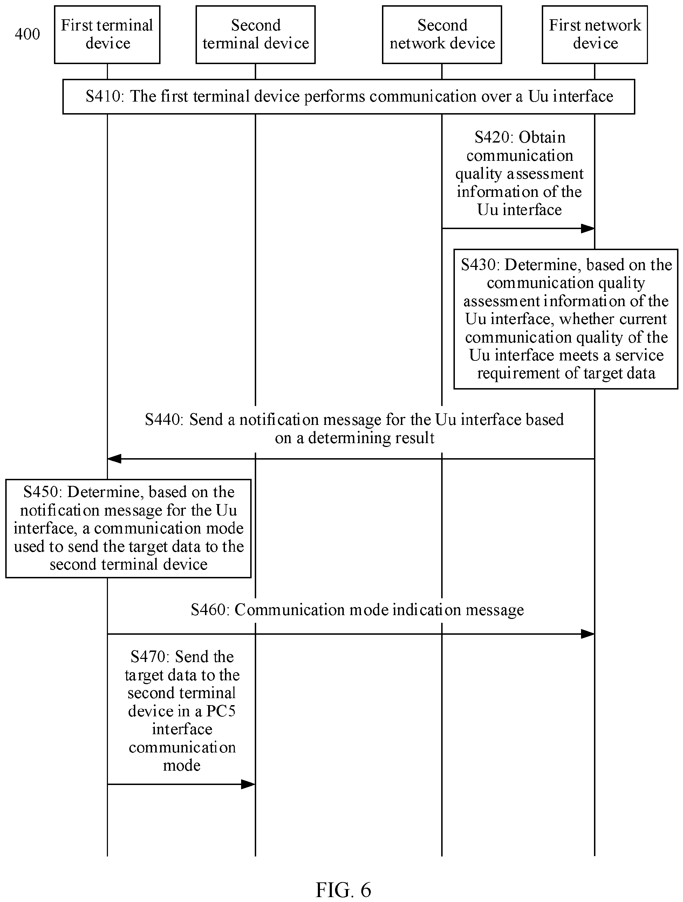

FIG. 6 is a schematic flowchart of a communication method 400 according to another embodiment of this application. As shown in FIG. 6, the method 400 is described as follows. The method provided in this embodiment of this application may be applied to a scenario in which a first terminal device communicates with a second terminal device in a Uu interface communication mode or a multipath communication mode. This is not limited.

S410: The first terminal device communicates with the second terminal device over a Uu interface.

For the second terminal device, refer to the related descriptions in the foregoing embodiment. Details are not described again.

S420: A first network device obtains communication quality assessment information of the Uu interface from a second network device.

For example, when the first terminal device communicates with the second terminal device over the Uu interface, when communication quality of the Uu interface deteriorates, or communication quality of the Uu interface is lower than a preset threshold (in other words, the communication quality is poor), for example, a delay rate of the Uu interface is higher than the preset threshold, the first network device obtains the communication quality assessment information of the Uu interface from the second network device. The communication quality of the Uu interface may deteriorate due to congestion, overload, or the like. This is not limited.

For example, when the first terminal device communicates with the second terminal device over the Uu interface, the first network device periodically obtains the communication quality assessment information of the Uu interface from the second network device.

Optionally, the communication quality assessment information of the Uu interface includes: communication quality information of a Uu interface of the first terminal device and/or communication quality information of a Uu interface of the second terminal device.

Optionally, the communication quality information of the Uu interface of the second terminal device may include Uu broadcast communication quality information. Refer to the related descriptions in the foregoing embodiment. Details are not described again.

The second network device may be an EPS/a 5GS, or may be another network element that may be configured to implement a same or similar function. This is not limited.

It should be noted that, the first network device may alternatively obtain the communication quality assessment information of the Uu interface from another device. This is not limited.

S430: The first network device determines, based on the communication quality assessment information of the Uu interface, whether current communication quality of the Uu interface meets a service requirement of target data.

After obtaining the communication quality information of the Uu interface, the first network device determines whether the current communication quality of the Uu interface meets the service requirement of the target data.

The target data represents to-be-transmitted data. For the service requirement of the target data, the first network device may use, in advance, a locally stored service requirement of the target data. For example, the first network device may determine, based on the locally stored service requirement of the target data and the communication quality assessment information of the Uu interface that is obtained in S420, whether the communication quality of the Uu interface meets the service requirement of the target data. Alternatively, the first network device may determine the service requirement of the target data through prediction based on data that has been transmitted or is being transmitted when the first terminal device communicates with the second terminal device over the Uu interface. For example, it is assumed that the first terminal device is transmitting data in L3 of an automatic driving service to the second terminal device. In this case, the first network device may predict that the target data is the data in L3 of the automatic driving service. Then, the first network device may determine, based on the communication quality assessment information of the Uu interface, whether the current communication quality of the Uu interface meets a service requirement in L3 of the automatic driving service.

For example, the requirement of the target data is a service requirement in L3 of the automatic driving service. The first network device determines whether the communication quality of the Uu interface meets the service requirement in L3 of the automatic driving service of the first terminal device. An assessment result of the first network device generally includes two cases: a case in which the communication quality of the Uu interface meets the service requirement in L3 of the automatic driving service of the first terminal device and a case in which the communication quality of the Uu interface does not meet the service requirement in L3 of the first terminal device.

A method for determining, by the first network device, whether the communication quality of the Uu interface meets the service requirement of the target data is similar to that described in the foregoing method 200, and details are not described again.

Optionally, the method further includes: The first network device determines services of the first terminal device, service requirements (namely, adapted service requirements), or the like that are supported by or adapted to the communication quality of the Uu interface. For example, after obtaining the communication quality assessment information of the Uu interface, the first network device determines that the communication quality of the Uu interface does not meet the service requirement in L3 of the automatic driving service of the first terminal device, and the communication quality of the Uu interface may meet service requirements in L2 and L1 of the automatic driving service of the first terminal device.

It should be noted that, for nouns, terms, and the like in this embodiment of this application, refer to the foregoing related descriptions. For example, for the adapted service requirement, refer to the related descriptions in the method 200. Details are not described again.

S440: The first network device sends a notification message for the Uu interface to the first terminal device based on a determining result.

In the first example, the notification message for the Uu interface includes communication quality reference information of the Uu interface. The communication quality reference information of the Uu interface includes indication information #3. The indication information #3 is used to indicate whether the communication quality of the Uu interface meets the service requirement of the target data.

For example, in S430, if the first network device determines that the communication quality of the Uu interface does not meet the service requirement of the target data, in S440, the indication information #3 sent by the first network device to the first terminal device is used to indicate that the communication quality of the Uu interface does not meet the service requirement of the target data.

For another example, in S430, if the first network device determines that the communication quality of the Uu interface meets the service requirement of the target data, in S440, the indication information #3 sent by the first network device to the first terminal device is used to indicate that the communication quality of the Uu interface meets the service requirement of the target data.

In the second example, the notification message for the Uu interface includes indication information #4, where the indication information #4 is used to indicate the service requirement adapted to the communication quality of the Uu interface.

Specifically, in S430, if the first network device determines the services of the first terminal device or the service requirements (namely, adapted service requirements) that are supported by or adapted to the communication quality of the Uu interface, in S440, the indication information #4 sent by the first network device to the first terminal device is used to indicate the service requirements adapted to the communication quality of the Uu interface. For example, in S430, if the first network device determines that the communication quality of the Uu interface can meet the service requirements in L2 and L1 of the automatic driving service, the first network device sends the indication information #4 to the first terminal device, where the indication information #4 is used to indicate that the communication quality of the Uu interface meets the service requirements in L2 and L1 of the automatic driving service. That the communication quality of the Uu interface may meet the service requirements in L2 and L1 of the automatic driving service may be further understood as that, to meet L2 and L1 of the automatic driving service, the first terminal device may transmit data of the automatic driving service over the Uu interface.

The indication information #3 and the indication information #4 may be used to separately indicate the first terminal device, or may be used to indicate the first terminal device in one piece of signaling. This is not limited. It should be understood that, the indication information #3 and the indication information #4 are merely named for differentiation, and do not limit the protection scope of this application.

The notification message for the Uu interface may be specifically a change notification (Uu condition change notify) message of the communication quality of the Uu interface. It should be understood that, both the notification message for the Uu interface and the change notification message of the communication quality of the Uu interface are named for ease of description. The names do not limit the protection scope of the embodiments of this application. The following uses the notification message for the Uu interface for representation.

Optionally, the notification message for the Uu interface may further include identifiers of services, applications, or application layer sessions that correspond to a change in the communication quality of the Uu interface. In other words, the communication quality of the Uu interface changes for the services, applications, or application layer sessions of the first terminal device

The following uses a service identifier as an example for description. The first network device has a matching relationship (for example, Table 1) between an application requirement and a communication requirement that correspond to a service. Therefore, the first network device may determine, based on the matching relationship and the obtained communication quality assessment information of the Uu interface, whether the communication quality of the Uu interface meets a service requirement of a service of the first terminal device. For example, it is assumed that the first network device determines, based on currently ongoing communication services of the first terminal device, that the ongoing communication services of the first terminal device include a service 1, a service 2, and a service 3, and in S440, the first network device determines that the communication quality of the Uu interface does not meet a service requirement of the service 1 and a service requirement of the service 2. In this case, in S440, the first network device may send information about the service 1 and the service 2 to the first terminal device. For example, the first network device sends identifier information of the service 1 and the service 2 to the first terminal device. The identifier information is used to indicate that the communication quality of the Uu interface of the first terminal device does not meet the service requirement of the service 1 and the service requirement of the service 2. It may also be understood as that the identifier information is used to indicate that the first terminal device may need to switch a communication mode for the service 1 and the service 2.

S450: The first terminal device determines, based on the notification message for the Uu interface, a communication mode used to send the target data to the second terminal device.

S450 may be implemented in the following manner:
In a first possible implementation, with reference to the second example in S440, the first terminal device may determine, based on the indication information #4, the communication mode used to send the target data to the second terminal device. The indication information #4 is used to indicate the service requirement adapted to the communication quality of the Uu interface. Correspondingly, the first terminal device may first update the service requirement of the target data based on the indication information #4, and then determine, based on the updated service requirement of the target data, the communication mode used to send the target data to the second terminal device.

For the adapted service requirement, refer to the related descriptions in the foregoing embodiment. Details are not described again.

Automatic driving is used as an example. It is assumed that the service requirement of the target data sent by the first terminal device to the second terminal device is the service requirement in L3 of the automatic driving service. If in S430, the first network device determines that the communication quality of the Uu interface does not meet the service requirement in L3 of the automatic driving service, and the first network device determines that the communication quality of the Uu interface can meet the service requirements in L2 and L1 of the automatic driving service, in S440, the first network device may send the indication information #4 to the first terminal device, where the indication information #4 is used to indicate that the communication quality of the Uu interface meets the service requirements in L2 and L1 of the automatic driving service. Correspondingly, after receiving the indication information #4, the first terminal device may update the service requirement of the target data. For example, the first terminal device updates the service requirement of the target data to the service requirement in L2 of the automatic driving service or the service requirement in L1 of the automatic driving service.

That the first terminal device updates the service requirement of the target data may be, for example, that the first terminal device triggers a PDU session change or QoS flow update, and the first network device modifies a parameter of a corresponding PDU session or QoS flow based on the trigger. For another example, that the first terminal device updates the service requirement of the target data may alternatively be that the first terminal device first notifies an application server that a PDU session needs to be changed or a QoS flow needs to be updated, then, the application server notifies the first network device that the first terminal device needs to change the PDU session or update the QoS flow, and the first network device modifies a parameter of the corresponding PDU session or QoS flow based on the notification. For how the first terminal device updates the service requirement of the target data, the foregoing is merely an example for description. This is not limited in the embodiments of this application. Any manner in which the first terminal device can update the service requirement of the target data falls within the protection scope of this application.

After updating the service requirement of the target data, the first terminal device determines, based on the updated service requirement of the target data, that the communication mode used to send the target data to the second terminal device is the Uu interface communication mode or the multipath communication mode. Specifically, as described above, the indication information #4 is used to indicate the service requirement adapted to the communication quality of the Uu interface. Therefore, after updating the service requirement of the target data based on the indication information #4, the first terminal device may determine that the communication quality of the Uu interface meets the updated service requirement of the target data. Therefore, the first terminal device may determine that the communication mode used to send the target data to the second terminal device is the Uu interface communication mode or the multipath communication mode.

It should be understood that, after the first terminal device updates the service requirement, transmitted data may be the same as original data to be transmitted, but the service requirement for transmitting the data is reduced. Alternatively, transmitted data may be different from original data to be transmitted. For example, some parameters may not be transmitted. This is not limited in the embodiments of this application. For example, the data that is in L3 of the automatic driving service and that is transmitted by the first terminal device to the second terminal device may be the same as or different from data that is in L2 or L1 of the automatic driving service and that is transmitted by the first terminal device to the second terminal device.

In a second possible implementation, with reference to the second example in S440, the first terminal device may determine, based on the indication information #4 and communication quality information of a PC5 interface, the communication mode used to send the target data to the second terminal device.

The first terminal device updates the service requirement of the target data based on the indication information #4. After updating the service requirement of the target data, the first terminal device determines whether communication quality of the PC5 interface meets the updated service requirement. It is assumed that the first terminal device determines, based on the communication quality information of the PC5 interface, that the communication quality of the PC5 interface meets the updated service requirement of the target data. The first terminal device may determine, based on a preference setting of preferentially selecting a PC5 interface communication mode, that the communication mode used to send the target data to the second terminal device is the PC5 interface communication mode. Alternatively, the first terminal device may determine, based on a reliability-first preference setting, that the communication mode used to send the target data to the second terminal device is the multipath communication mode.

In a third possible implementation, with reference to the first example in S440, the first terminal device may alternatively determine, based on the indication information #3 and communication quality information of a PC5 interface, the communication mode used to send the target data to the second terminal device. The indication information #3 is used to indicate whether the communication quality of the Uu interface meets the service requirement of the target data.

For details, refer to the description in the third possible implementation in S220 in the method 200. Details are not described again.

It is assumed that in S450, the first terminal device determines that the communication mode is the PC5 interface communication mode. In other words, if the first terminal device determines to perform communication only over the PC5 interface, steps S460 and S470 are performed.

S460: The first terminal device sends a communication mode indication message to the first network device.

The first terminal device sends the communication mode indication message to the first network device, where the communication mode indication message is used to notify the first network device of the communication mode of the first terminal device. To be specific, the first terminal device determines to switch a communication mode from the Uu interface communication mode or the multipath communication mode to the PC5 interface communication mode.

Optionally, when the first network device determines that the communication mode of the first terminal device is switched to the PC5 interface communication mode, the first network device may further release a communication resource on the Uu interface of the first terminal device, or the first network device stops sending data to the first terminal device over the Uu interface.

S470: The first terminal device sends the target data to the second terminal device in the PC5 interface communication mode.

Optionally, the first terminal device establishes a PC5 interface connection to the second terminal device.

It should be understood that, that the first terminal device determines, based on the communication quality reference information of the Uu interface and the communication quality information of the PC5 interface, the communication mode used to send the target data to the second terminal device may be further understood as that the first terminal device obtains the communication quality of the Uu interface based on the communication quality information of the Uu interface, obtains the communication quality of the PC5 interface based on the communication quality information of the PC5 interface, and determines, based on the communication quality of the Uu interface and the communication quality of the PC5 interface, the communication mode used to send the target data to the second terminal device.

It should be noted that, in this embodiment of this application, "the PC5 interface communication mode" may be replaced with "performing communication only over the PC5 interface", "the Uu interface communication mode" may be replaced with "performing communication only over the Uu interface", and "the multipath interface communication mode" may be replaced with "performing communication over both the PC5 interface and the Uu interface".

Based on the foregoing technical solution, when the first terminal device performs communication in the Uu interface communication mode or the multipath communication mode, the first network device may send the notification message for the Uu interface to the first terminal device when the communication quality of the Uu interface of the first terminal device deteriorates, so that based on the notification message for the Uu interface and the communication quality information of the PC5 interface of the first terminal device, the first terminal device may determine whether to switch a communication mode, or determine to use a communication mode in which communication quality is better, to transmit data, thereby improving data transmission performance. For example, the first terminal device may determine, based on the communication quality reference information of the Uu interface that is included in the notification message for the Uu interface and the communication quality information of the PC5 interface of the first terminal device, whether a communication mode needs to be switched, or may determine to update the service requirement of the data based on information that is about the adapted service requirement and that is included in the notification message for the Uu interface and the communication quality information of the PC5 interface of the first terminal device, thereby dynamically adjusting, in comprehensive consideration of changes in communication quality of the communications interfaces, the communication mode for transmitting the data, or dynamically updating the service requirement of the data based on changes in communication quality of the communications interfaces, to improve data transmission performance as much as possible.

In addition, based on the foregoing technical solution, when the communication quality of the Uu interface deteriorates or is poor, the first network device sends the notification message for the Uu interface to the first terminal device, so that unnecessary signaling overheads can be reduced, and the first terminal device can learn of the communication quality of the Uu interface in time.

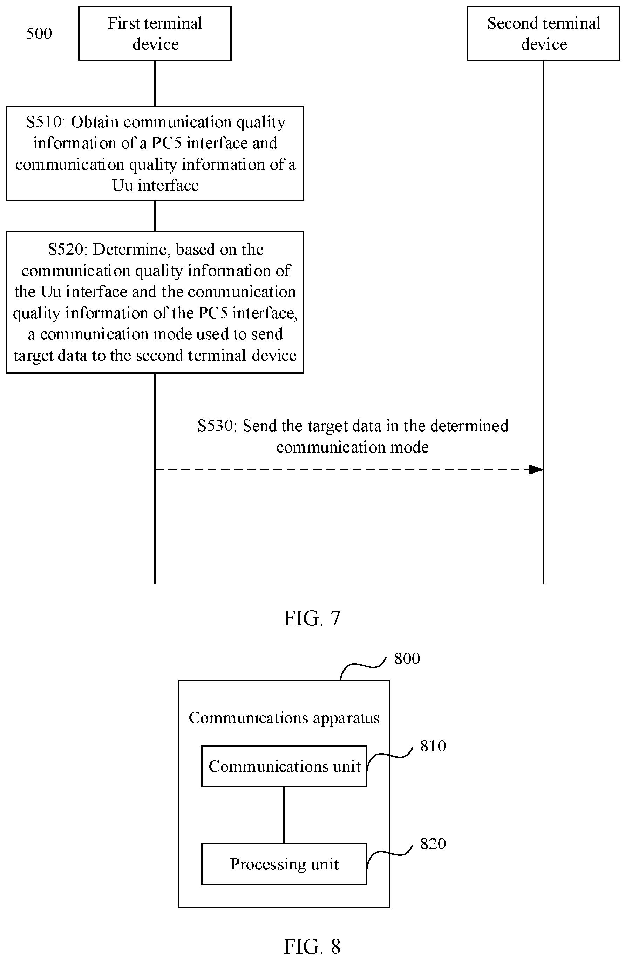

FIG. 7 is a schematic flowchart of a communication method 500 according to another embodiment of this application. As shown in FIG. 7, the method 500 is described as follows.

S510: Afirst terminal device obtains communication quality information of a PC5 interface, and receives communication quality information of a Uu interface from a first network device.

The communication quality information of the PC5 interface, for example, communication quality information that is of the PC5 interface of the first terminal device and that is obtained by using a measurement parameter of a lower-layer communication channel of the PC5 interface, includes communication quality information sent in an uplink of the PC5 and communication quality information received in a downlink of the PC5.

In a possible implementation, the communication quality information of the PC5 interface may be historical communication quality information of the PC5 interface of the first terminal device. For example, the communication quality information of the PC5 interface may alternatively be predicted based on communication quality information of the PC5 interface of the first terminal device in a historical communication process (for example, a previous communication process).

In another possible implementation, the communication quality information of the PC5 interface may be current communication quality information of the PC5 interface of the first terminal device. For example, when the first terminal device currently performs communication in a PC5 interface communication mode or a multipath communication mode, the first terminal device may obtain current communication quality of the PC5 interface by measuring quality of a signal received on the PC5 interface of the first terminal device from a second terminal device and used to carry data, to obtain current communication quality of the PC5 interface. For another example, when no data is transmitted on the PC5 interface between the first terminal device and the second terminal device, the first terminal device may obtain the current communication quality information of the PC5 interface by measuring quality of a testing signal received on the PC5 interface of the first terminal device from the second terminal device.

It should be noted that, for details of obtaining the communication quality information of the PC5 interface, refer to the related descriptions in the method 200. Details are not described herein again.

The communication quality information of the Uu interface includes at least one of the following: communication quality information of a Uu interface of the first terminal device and/or communication quality information of a Uu interface of the second terminal device. The communication quality information of the Uu interface may be obtained by requesting, by the first terminal device from the first network device. To be specific, the first terminal device requests, from the first network device, the communication quality information of the Uu interface, and the first network device sends the communication quality information of the Uu interface to the first terminal device based on the request. Alternatively, the communication quality information of the Uu interface may be pushed by the first network device to the first terminal device. For example, the first network device is triggered, based on an event, to push the communication quality information of the Uu interface to the first terminal device, or the first network device periodically pushes the communication quality information of the Uu interface to the first terminal device. For details, refer to Manner 1 and Manner 2 in the method 200.

In a possible implementation, the communication quality information of the Uu interface may be predicted based on communication quality information of the Uu interface in a historical communication process (for example, a previous communication process). The communication quality information of the Uu interface of the first terminal device is used as an example. The communication quality information of the Uu interface of the first terminal device may be determined by the first network device based on communication quality of the Uu interface that corresponds when the first terminal device performs communication in a Uu interface communication mode or in the multipath communication mode in the historical communication process (for example, the previous communication process). Alternatively, in another possible implementation, the communication quality information of the Uu interface is determined based on current communication quality. The communication quality information of the Uu interface of the first terminal device is used as an example. When the first terminal device currently performs communication in the Uu interface communication mode or in the multipath communication mode, the communication quality information of the Uu interface of the first terminal device may be determined by the first network device based on current communication quality of the Uu interface.

It should be noted that, for details of obtaining the communication quality information of the Uu interface, refer to the related descriptions in the method 200. Details are not described herein again.

It should be noted that, for nouns, terms, and the like in this embodiment of this application, refer to the foregoing related descriptions. For example, for the second terminal device, target data, a service requirement of the target data, and the communication quality, refer to the foregoing related descriptions. Details are not described again.

S520: The first terminal device determines, based on the communication quality information of the PC5 interface and the obtained communication quality information of the Uu interface that are obtained, a communication mode used to send the target data to the second terminal device.

Communication modes include the PC5 interface communication mode, the Uu interface communication mode, and the multipath communication mode.

The first terminal device may determine communication quality of the PC5 interface based on the communication quality information of the PC5 interface, and may determine communication quality of the Uu interface based on the communication quality information of the Uu interface. The communication quality information of the Uu interface includes the communication quality information of the Uu interface of the first terminal device and/or the communication quality information of the Uu interface of the second terminal device.

Optionally, the communication quality information of the Uu interface of the second terminal device may include Uu broadcast communication quality information used to transmit the target data. Refer to the related descriptions in the foregoing embodiment. Details are not described again.

In a first possible implementation, the first terminal device determines, based on the communication quality information of the Uu interface and the communication quality information of the PC5 interface, a communication mode in which communication quality is better, as the communication mode used to send the target data to the second terminal device. For example, when the communication quality of the PC5 interface is better than the communication quality of the Uu interface, the first terminal device may send the target data to the second terminal device in the PC5 interface communication mode.

For details, refer to the related descriptions in S220 in the method 200. Details are not described again.

In a second possible implementation, the first terminal device determines, based on the communication quality information of the Uu interface and the communication quality information of the PC5 interface, a communication mode in which communication quality meets a preset condition, as the communication mode used to send the target data to the second terminal device.

For details, refer to the related descriptions in S220 in the method 200. Details are not described again.

In a third possible implementation, the first terminal device determines, based on the communication quality information of the Uu interface, the communication quality information of the PC5 interface, and the service requirement of the target data, the communication mode used to send the target data to the second terminal device.

Automatic driving is used as an example. It is assumed that the target data to be sent by the first terminal device to the second terminal device is data in L3 of an automatic driving service. The first terminal device determines whether the communication quality information of the Uu interface and the communication quality information of the PC5 interface meet a service requirement of the data in L3 of the automatic driving service.

If the first terminal device determines that neither the communication quality of the Uu interface nor the communication quality of the PC5 interface meets the service requirement of the data in L3 of the automatic driving service, the first terminal device determines that the communication mode used to send the target data to the second terminal device is the multipath communication mode, or determines that the communication mode used to send the target data to the second terminal device is a current communication mode. If the first terminal device determines that the communication quality of the Uu interface does not meet the service requirement of the data in L3 of the automatic driving service, and the communication quality of the PC5 interface meets the service requirement of the data in L3 of the automatic driving service, the first terminal device determines that the communication mode used to send the target data to the second terminal device is the PC5 interface communication mode. If the first terminal device determines that the communication quality of the PC5 interface does not meet the service requirement of the data in L3 of the automatic driving service, and the communication quality of the Uu interface meets the service requirement of the data in L3 of the automatic driving service, the first terminal device determines that the communication mode used to send the target data to the second terminal device is the Uu interface communication mode.

It should be understood that, the foregoing is merely an example for description. Any method that can enable the first terminal device to determine, based on the communication quality information of the Uu interface, the communication quality information of the PC5 interface, and the service requirement of the target data, the communication mode used to send the target data to the second terminal device falls within the protection scope of this embodiment of this application.

Based on the foregoing technical solution, the first terminal device comprehensively considers communication quality of the communications interfaces to determine the communication mode for transmitting the target data, to be specific, determines, based on the communication quality information of the PC5 interface and the communication quality information of the Uu interface, the communication mode used to transmit the data, thereby dynamically adjusting, in consideration of changes in the communication quality of the communications interfaces, the communication mode for transmitting the data. For example, when the communication quality of the Uu interface deteriorates or is poor, the first terminal device may determine, based on the communication quality information of the PC5 interface and the communication quality information of the Uu interface that are obtained, to transmit the target data in the PC5 interface communication mode. For another example, when the communication quality of the PC5 interface deteriorates or is poor, the first terminal device may determine, based on the communication quality information of the PC5 interface and the communication quality information of the Uu interface that are obtained, to transmit the target data in the Uu interface communication mode. For another example, when both the communication quality of the PC5 interface and the communication quality of the Uu interface are poor, the first terminal device may determine, based on the communication quality information of the PC5 interface and the communication quality information of the Uu interface that are obtained, to transmit the target data in the multipath communication mode, to ensure data transmission performance and improve user experience. According to this application, the first terminal device can comprehensively consider the communication quality of the communications interfaces, for example, consider which communications interface has better communication quality, has communication quality meeting the preset condition, or has communication quality meeting the requirement of the target data, and can determine a more appropriate communication mode based on an actual communication status, to better transmit the target data and improve the data transmission performance.

Optionally, the method 500 further includes step 530.

S530: The first terminal device sends the target data to the second terminal device in the determined communication mode.

For S530, refer to S230 in the method 200. Details are not described again.

Optionally, when the communication mode determined by the first terminal device is the PC5 interface communication mode, the method further includes: sending, by the first terminal device, a communication mode indication message to the first network device, where the communication mode indication message is used to indicate that the first terminal device performs communication in the PC5 interface communication mode.

Correspondingly, after the first network device receives the communication mode indication message, the first network device may further release a communication resource on the Uu interface of the first terminal device, or the first network device stops sending data to the first terminal device over the Uu interface. For example, when a Uu interface between the first terminal device and the first network device is in a Uu unicast mode, after the first network device receives the communication mode indication message, the first network device stops sending data to the first terminal device over the Uu interface.

It should be noted that, in this embodiment of this application, "the PC5 interface communication mode" may be replaced with "performing communication only over the PC5 interface", "the Uu interface communication mode" may be replaced with "performing communication only over the Uu interface", and "the multipath interface communication mode" may be replaced with "performing communication over both the PC5 interface and the Uu interface".

It should be understood that, sequence numbers of the processes do not mean execution sequences in the embodiments of this application. The execution sequences of the processes should be determined according to functions and internal logic of the processes, and should not be construed as any limitation on implementation processes of the embodiments of this application.

The foregoing describes in detail the communication methods in this application with reference to FIG. 1 to FIG. 7. The following describes in detail communications apparatuses in this application with reference to FIG. 8 to FIG. 13.

FIG. 8 is a schematic block diagram of a communications apparatus 800 according to an embodiment of this application. The communications apparatus 800 may be configured to perform the actions of the first terminal device in the foregoing method embodiment. The communications apparatus 800 may be a terminal device, or a chip or a system-on-a-chip that is located in a terminal device. As shown in FIG. 8, the communications apparatus 800 may include:
a communications unit 810, configured to receive communication quality reference information of a Uu interface from a network device; and
a processing unit 820, configured to determine, based on the communication quality reference information of the Uu interface and communication quality information of a PC5 interface, a communication mode used to send target data to a second terminal device, where the communication mode is any one of the following: a Uu interface communication mode, a PC5 interface communication mode, or a multipath communication mode, the PC5 interface is an interface for direct communication between the communications apparatus 800 and the second terminal device, and communications interfaces in the multipath communication mode include the PC5 interface and the Uu interface.

Optionally, the communication quality reference information of the Uu interface includes: communication quality information of a Uu interface of the communications apparatus 800 and/or communication quality information of a Uu interface of the second terminal device; or indication information, where the indication information is used to indicate whether communication quality of the Uu interface meets a service requirement of the target data, and the Uu interface includes a Uu interface of the communications apparatus 800 and/or a Uu interface of the second terminal device.

Optionally, the processing unit 820 is specifically configured to determine, based on the communication quality reference information of the Uu interface, the communication quality information of the PC5 interface, and the service requirement of the target data, the communication mode used to send the target data to the second terminal device.

Optionally, the communication quality reference information of the Uu interface includes the indication information. The processing unit 820 is specifically configured to determine, based on the communication quality information of the PC5 interface, that communication quality of the PC5 interface does not meet the service requirement of the target data. When the indication information is used to indicate that the communication quality of the Uu interface meets the service requirement of the target data, the processing unit 820 is configured to determine that the communication mode used to send the target data to the second terminal device is the Uu interface communication mode. Alternatively, when the indication information is used to indicate that the communication quality of the Uu interface does not meet the service requirement of the target data, the processing unit 820 is configured to determine that the communication mode used to send the target data to the second terminal device is the PC5 interface communication mode.

Optionally, the communication quality reference information of the Uu interface includes indication information. The processing unit 820 is specifically configured to: when the indication information is used to indicate that the communication quality of the Uu interface does not meet the service requirement of the target data, and the processing unit 820 determines, based on the communication quality information of the PC5 interface, that the communication quality of the PC5 interface meets the service requirement of the target data, determine that the communication mode used to send the target data to the second terminal device is the PC5 interface communication mode.

Optionally, the communication quality reference information of the Uu interface includes the indication information. The processing unit 820 is specifically configured to: when the indication information is used to indicate that the communication quality of the Uu interface does not meet the service requirement of the target data, and the processing unit 820 determines, based on the communication quality information of the PC5 interface, that the communication quality of the PC5 interface does not meet the service requirement of the target data, determine that the communication mode used to send the target data to the second terminal device is the Uu interface communication mode, or determine that the communication mode used to send the target data to the second terminal device is the multipath communication mode.

Optionally, the communications unit 810 is further configured to receive a service requirement that is adapted to the communication quality of the Uu interface and that is from the network device. The processing unit 820 is further configured to update the service requirement of the target data based on the service requirement adapted to the communication quality of the Uu interface.

Optionally, the communications unit 810 sends the target data to the second terminal device in the determined communication mode.

Optionally, the communications unit 810 is further configured to: request, from the network device, the communication quality reference information of the Uu interface, and receive the communication quality reference information of the Uu interface that is from the network device.

Optionally, the communications unit 810 is specifically configured to send a request message to the network device, where the request message is used to request the communication quality reference information of the Uu interface, and the request message includes at least one of the following: identifier information of the target data, the service requirement of the target data, a target area of the target data, identity information of the second terminal device, or identity information of the communications apparatus 800, where the target area is a corresponding area to which the target data is to be transmitted.

Optionally, when the communication mode determined by the processing unit 820 is the PC5 interface communication mode, the communications unit 810 is further configured to send a communication mode indication message to the network device, where the communication mode indication message is used to indicate that the communications apparatus 800 performs communication in the PC5 interface communication mode.

The processing unit 820 may be a processor or a controller, for example, may be a central processing unit (central processing unit, CPU), a general purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processor unit 820 may implement or execute various example logical blocks, modules, and circuits that are described with reference to content disclosed in this application. The processor may alternatively be a combination of processors implementing a computing function, for example, a combination of one or more microprocessors, or a combination of the DSP and a microprocessor. The communications unit 810 may be a transceiver, a transceiver circuit, or the like.

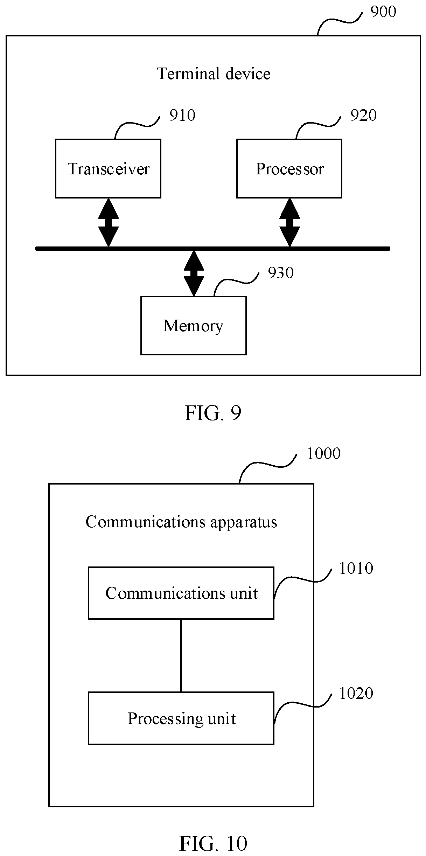

When the processing unit 820 is a processor and the communications unit 810 is a transceiver, the communications apparatus in this application may be a terminal device shown in FIG. 9.

FIG. 9 is a schematic structural diagram of the terminal device 900 according to an embodiment of this application. The terminal device 900 may be applied to the system shown in FIG. 1 or FIG. 2, and perform the actions of the first terminal device in the foregoing method embodiment. As shown in FIG. 9, the terminal device 900 may include a processor 920, a transceiver 910, and a memory 930. The transceiver 910, the processor 920, and the memory 930 may communicate with each other through an internal connection path, to transfer a control and/or data signal.

For the processor 920 and the memory 930, the memory 930 stores a computer instruction, and when the processor 920 executes the computer instruction, the terminal device 900 is enabled to perform the following steps: receiving communication quality reference information of a Uu interface from a network device; and determining, based on the communication quality reference information of the Uu interface and communication quality information of a PC5 interface, a communication mode used to send target data to a second terminal device, where the communication mode is any one of the following: a Uu interface communication mode, a PC5 interface communication mode, or a multipath communication mode, the PC5 interface is an interface for direct communication between the terminal device 900 and the second terminal device, and communications interfaces in the multipath communication mode include the PC5 interface and the Uu interface.

It may be clearly understood by a person skilled in the art that, for the purpose of convenient and brief description, for a detailed working process of the foregoing apparatus and units, refer to a corresponding process in the foregoing method embodiments. Details are not described herein again.

FIG. 10 is a schematic block diagram of another communications apparatus 1000 according to an embodiment of this application. The communications apparatus 1000 may be applied to the system shown in FIG. 1 or FIG. 2, and perform the actions of the first network device (for example, a V2X server) in the foregoing method embodiment. The communications apparatus 1000 may be a first network device, or a chip or a system-on-a-chip that is located in a first network device. As shown in FIG. 10, the communications apparatus 1000 may include:
a communications unit 1010, configured to obtain communication quality reference information of a Uu interface, where the Uu interface includes a Uu interface of a first terminal device and/or a Uu interface of a second terminal device, the first terminal device is a transmit end of target data, and the second terminal device is a receive end of the target data, where the communications unit 1010 is further configured to send the communication quality reference information of the Uu interface to the first terminal device.

Optionally, the communication quality reference information of the Uu interface includes: communication quality information of the Uu interface of the first terminal device and/or communication quality information of the Uu interface of the second terminal device; or indication information, where the indication information is used to indicate whether communication quality of the Uu interface meets a service requirement of the target data, and the Uu interface includes the Uu interface of the first terminal device and/or the Uu interface of the second terminal device.

Optionally, the communications unit 1010 is specifically configured to receive a request message from the first terminal device, where the request message is used to request the communication quality reference information of the Uu interface. The communications apparatus 1000 further includes a processing unit 1020. The processing unit 1020 is configured to obtain the communication quality reference information of the Uu interface based on the request message.

Optionally, the request message includes at least one of the following: identifier information of the target data, the service requirement of the target data, a target area of the target data, identity information of the second terminal device, or identity information of the first terminal device, where the target area is a corresponding area to which the target data is to be transmitted.

Optionally, when communication quality of the Uu interface of the first terminal device meets the service requirement of the target data, the indication information is used to indicate that the communication quality of the Uu interface of the first terminal device meets the service requirement of the target data; when communication quality of the Uu interface of the first terminal device does not meet the service requirement of the target data, the indication information is used to indicate that the communication quality of the Uu interface of the first terminal device does not meet the service requirement of the target data; when communication quality of the Uu interface of the second terminal device meets the service requirement of the target data, the indication information is used to indicate that the communication quality of the Uu interface of the second terminal device meets the service requirement of the target data; when communication quality of the Uu interface of the second terminal device does not meet the service requirement of the target data, the indication information is used to indicate that the communication quality of the Uu interface of the second terminal device does not meet the service requirement of the target data; or when communication quality of the Uu interface of the first terminal device meets the service requirement of the target data, and communication quality of the Uu interface of the second terminal device meets the service requirement of the target data, the indication information is used to indicate that both the communication quality of the Uu interface of the first terminal device and the communication quality of the Uu interface of the second terminal device meet the service requirement of the target data.

Optionally, when the communication quality of the Uu interface does not meet the service requirement of the target data, the communications unit 1010 is further configured to send, to the first terminal device, a service requirement adapted to the communication quality of the Uu interface.

Optionally, the communications unit 1010 is further configured to receive a communication mode indication message from the first terminal device, where the communication mode indication message is used to indicate that the first terminal device performs communication in a PC5 interface communication mode. The processing unit 1020 is configured to release a communication resource on the Uu interface of the first terminal device based on the communication mode indication message.

The processing unit 1020 may be a processor or a controller, for example, may be a CPU, a general purpose processor, a DSP, an ASIC, an FPGA or another programmable logic device, a transistor logic device, a hardware component, or any combination thereof. The processing unit 1020 may implement or execute various example logical blocks, modules, and circuits that are described with reference to content disclosed in this application. The processor may alternatively be a combination of processors implementing a computing function, for example, a combination of one or more microprocessors, or a combination of the DSP and a microprocessor. The communications unit 1010 may be a communications interface, a transceiver circuit, or the like.

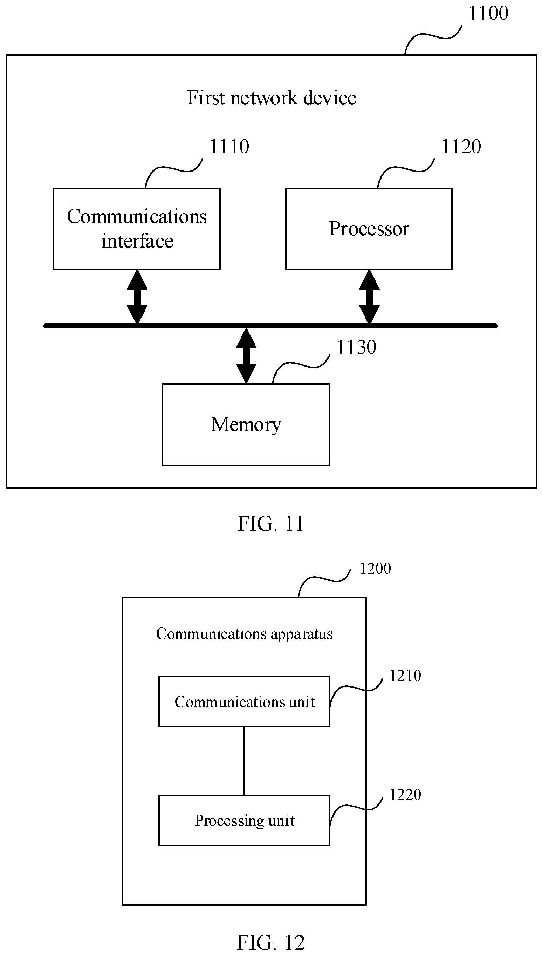

When the processing unit 1020 is a processor and the communications unit 1010 is a communications interface, the communications apparatus in this application may be a first network device shown in FIG. 11.

FIG. 11 is a schematic structural diagram of the first network device 1100 according to an embodiment of this application. The first network device 1100 may be applied to the system shown in FIG. 1 or FIG. 2, and perform the actions of the first network device in the foregoing method embodiment. As shown in FIG. 11, the first network device 1100 may include a processor 1120, a transceiver 1110, and a memory 1130. The transceiver 1110, the processor 1120, and the memory 1130 may communicate with each other through an internal connection path, to transfer a control and/or data signal. The transceiver 1110 may be a communications interface.

For the processor 1120 and the memory 1130, the memory 1130 stores a computer instruction, and when the processor 1120 executes the computer instruction, the first network device 1100 is enabled to perform the following steps: obtaining communication quality reference information of a Uu interface, where the Uu interface includes a Uu interface of a first terminal device and/or a Uu interface of a second terminal device, the first terminal device is a transmit end of target data, and the second terminal device is a receive end of the target data; and sending the communication quality reference information of the Uu interface to the first terminal device.

It may be clearly understood by a person skilled in the art that, for the purpose of convenient and brief description, for a detailed working process of the foregoing apparatus and units, refer to a corresponding process in the foregoing method embodiments. Details are not described herein again.

FIG. 12 is a schematic block diagram of another communications apparatus 1200 according to an embodiment of this application. The communications apparatus 1200 may perform the actions of the second network device (for example, an EPS/a 5GS) in the foregoing method embodiment. The communications apparatus 1200 may be a second network device, or a chip or a system-on-a-chip that is located in the second network device. As shown in FIG. 12, the communications apparatus 1200 may include:
a processing unit 1220, configured to determine communication quality reference information of a Uu interface, where the Uu interface includes a Uu interface of a first terminal device and/or a Uu interface of a second terminal device, the first terminal device is a transmit end of target data, and the second terminal device is a receive end of the target data; and
a communications unit 1210, configured to send communication quality information of the Uu interface to a first network device.

The processing unit 1220 may be a processor or a controller, for example, may be a CPU, a general purpose processor, a DSP, an ASIC, an FPGA or another programmable logic device, a transistor logic device, a hardware component, or any combination thereof. The processing unit 1220 may implement or execute various example logical blocks, modules, and circuits that are described with reference to content disclosed in this application. The processor may alternatively be a combination of processors implementing a computing function, for example, a combination of one or more microprocessors, or a combination of the DSP and a microprocessor. The communications unit 1210 may be a communications interface, a transceiver circuit, or the like.

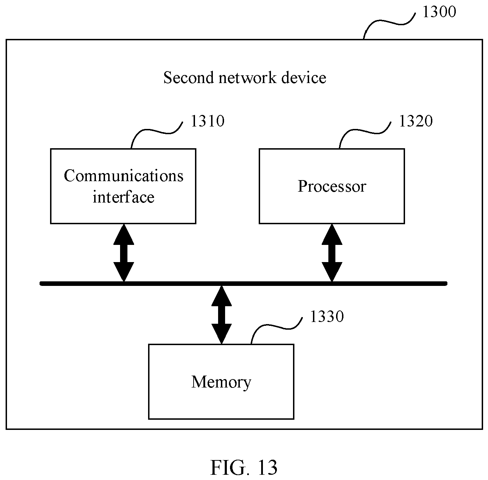

When the processing unit 1220 is a processor and the communications unit 1210 is a communications interface, the communications apparatus in this application may be a second network device shown in FIG. 13.

FIG. 13 is a schematic structural diagram of the second network device 1300 according to an embodiment of this application. The second network device 1300 may be applied to the system shown in FIG. 1 or FIG. 2, and perform the actions of the second network device in the foregoing method embodiment. As shown in FIG. 13, the second network device 1300 may include a processor 1320, a transceiver 1310, and a memory 1330. The transceiver 1310, the processor 1320, and the memory 1330 may communicate with each other through an internal connection path, to transfer a control and/or data signal. The transceiver 1310 may be a communications interface.

For the processor 1320 and the memory 1330, the memory 1330 stores a computer instruction, and when the processor 1320 executes the computer instruction, the second network device 1300 is enabled to perform the following steps: determining communication quality reference information of a Uu interface, where the Uu interface includes a Uu interface of a first terminal device and/or a Uu interface of a second terminal device, the first terminal device is a transmit end of target data, and the second terminal device is a receive end of the target data; and sending communication quality information of the Uu interface to a first network device.

It may be clearly understood by a person skilled in the art that, for the purpose of convenient and brief description, for a detailed working process of the foregoing apparatus and units, refer to a corresponding process in the foregoing method embodiments. Details are not described herein again.

It should be understood that, the processor mentioned in the embodiments of this application may include a CPU, a network processor (network processor, NP), or a combination of a CPU and an NP. The processor may further include a hardware chip. The hardware chip may be an ASIC, a programmable logic device (programmable logic device, PLD), or a combination thereof. The PLD may be a complex programmable logic device (complex programmable logic Device, CPLD), an FPGA, generic array logic (generic array logic, GAL), or any combination thereof.

It should be further understood that, the memory mentioned in the embodiments of this application may be a volatile memory (volatile memory) or a nonvolatile memory (non-volatile memory), or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), or an electrically erasable programmable read-only memory (electrically EPROM, EEPROM), a flash memory (flash memory), a hard disk drive (hard disk drive, HDD), or a solid-state drive (solid-state drive, SSD). The volatile memory may be a random access memory (random access memory, RAM), used as an external cache. Through example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that, when the processor is a general purpose processor, a DSP, an ASIC, an FPGA or another programmable logic device, a discrete gate or transistor logic device, or a discrete hardware component, the memory (storage module) is integrated into the processor.

It should be noted that, the memory described in this specification includes but is not limited to these and any memory of another proper type.

An embodiment of this application further provides a computer-readable storage medium. The computer-readable storage medium stores an instruction. When the instruction is run on a computer, the computer is enabled to perform steps performed by one of the terminal devices in the foregoing method embodiments.

An embodiment of this application further provides a computer-readable storage medium. The computer-readable storage medium stores an instruction. When the instruction is run on a computer, the computer is enabled to perform steps performed by the first network device in the foregoing method embodiments.

An embodiment of this application further provides a computer-readable storage medium. The computer-readable storage medium stores an instruction. When the instruction is run on a computer, the computer is enabled to perform steps performed by the second network device in the foregoing method embodiments.

An embodiment of this application further provides a computer program product that includes an instruction. When the instruction of the computer program product is run on a computer, the computer performs steps performed by the terminal devices in the foregoing method embodiments.

An embodiment of this application further provides a computer program product that includes an instruction. When the instruction of the computer program product is run on a computer, the computer performs steps performed by the first network device in the foregoing method embodiments.

An embodiment of this application further provides a computer program product that includes an instruction. When the instruction of the computer program product is run on a computer, the computer performs steps performed by the second network device in the foregoing method embodiments.

An embodiment of this application further provides a computer chip. The computer chip enables a computer to perform the steps performed by the terminal devices in the foregoing method embodiments.

An embodiment of this application further provides a computer chip. The computer chip enables a computer to perform the steps performed by the first network device in the foregoing method embodiments.

An embodiment of this application further provides a computer chip. The computer chip enables a computer to perform the steps performed by the second network device in the foregoing method embodiments.

An embodiment of this application further provides a communications system, including the first terminal device and the first network device in the foregoing method embodiments.

An embodiment of this application further provides a communications system, including the first terminal device, the second terminal device, the first network device, and the second network device in the foregoing method embodiments.

All or some of the devices or the network elements that are provided in the embodiments of this application may be implemented by using software, hardware, firmware, or any combination thereof. When software is used to implement the embodiments, the embodiments may be implemented completely or partially in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high density digital video disc (digital video disc, DVD)), a semiconductor medium (for example, an SSD), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

In the several embodiments provided in this application, it should be understood that, the disclosed systems, apparatuses, and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each unit may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first terminal device, communication quality reference information of a Uu interface from a network device; and
determining, by the first terminal device based on the communication quality reference information of the Uu interface and communication quality information of a PC5 interface, a communication mode used to send target data to a second terminal device, wherein
the communication mode is any one of the following: a Uu interface communication mode, a PC5 interface communication mode, or a multipath communication mode, the PC5 interface is an interface for direct communication between the first terminal device and the second terminal device, and communications interfaces in the multipath communication mode comprise the PC5 interface and the Uu interface.

2. The method according to claim 1, wherein the communication quality reference information of the Uu interface comprises:
communication quality information of a Uu interface of the first terminal device and/or communication quality information of a Uu interface of the second terminal device; or
indication information, wherein the indication information is used to indicate whether communication quality of the Uu interface meets a service requirement of the target data, and the Uu interface comprises a Uu interface of the first terminal device and/or a Uu interface of the second terminal device.

3. The method according to claim 1 or 2, wherein the determining, by the first terminal device based on the communication quality reference information of the Uu interface and communication quality information of a PC5 interface, a communication mode used to send target data to a second terminal device comprises:
determining, by the first terminal device based on the communication quality reference information of the Uu interface, the communication quality information of the PC5 interface, and the service requirement of the target data, the communication mode used to send the target data to the second terminal device.

4. The method according to claim 3, wherein the communication quality reference information of the Uu interface comprises the indication information; and
the determining, by the first terminal device based on the communication quality reference information of the Uu interface, the communication quality information of the PC5 interface, and the service requirement of the target data, the communication mode used to send the target data to the second terminal device comprises:
determining, by the first terminal device based on the communication quality information of the PC5 interface, that communication quality of the PC5 interface does not meet the service requirement of the target data; and
when the indication information is used to indicate that the communication quality of the Uu interface meets the service requirement of the target data, determining, by the first terminal device, that the communication mode used to send the target data to the second terminal device is the Uu interface communication mode; or
when the indication information is used to indicate that the communication quality of the Uu interface does not meet the service requirement of the target data, determining, by the first terminal device, that the communication mode used to send the target data to the second terminal device is the PC5 interface communication mode.

5. The method according to claim 3, wherein the communication quality reference information of the Uu interface comprises the indication information; and
the determining, by the first terminal device based on the communication quality reference information of the Uu interface, the communication quality information of the PC5 interface, and the service requirement of the target data, the communication mode used to send the target data to the second terminal device comprises:
when the indication information is used to indicate that the communication quality of the Uu interface does not meet the service requirement of the target data, and the first terminal device determines, based on the communication quality information of the PC5 interface, that communication quality of the PC5 interface meets the service requirement of the target data, determining, by the first terminal device, that the communication mode used to send the target data to the second terminal device is the PC5 interface communication mode.

6. The method according to claim 3, wherein the communication quality reference information of the Uu interface comprises the indication information; and
the determining, by the first terminal device based on the communication quality reference information of the Uu interface, the communication quality information of the PC5 interface, and the service requirement of the target data, the communication mode used to send the target data to the second terminal device comprises:
when the indication information is used to indicate that the communication quality of the Uu interface does not meet the service requirement of the target data, and the first terminal device determines, based on the communication quality information of the PC5 interface, that communication quality of the PC5 interface does not meet the service requirement of the target data, determining, by the first terminal device, that the communication mode used to send the target data to the second terminal device is the Uu interface communication mode, or determining, by the first terminal device, that the communication mode used to send the target data to the second terminal device is the multipath communication mode.

7. The method according to claim 6, wherein the method further comprises:
receiving, by the first terminal device, a service requirement that is adapted to the communication quality of the Uu interface and that is from the network device; and
updating, by the first terminal device, the service requirement of the target data based on the service requirement adapted to the communication quality of the Uu interface.

8. The method according to any one of claims 1 to 7, wherein the method further comprises:
sending, by the first terminal device, the target data to the second terminal device in the determined communication mode.

9. The method according to any one of claims 1 to 8, wherein the method further comprises:
requesting, by the first terminal device from the network device, the communication quality reference information of the Uu interface.

10. The method according to claim 9, wherein the requesting, by the first terminal device from the network device, the communication quality reference information of the Uu interface comprises:
sending, by the first terminal device, a request message to the network device, wherein the request message is used to request the communication quality reference information of the Uu interface, wherein
the request message comprises at least one of the following: identifier information of the target data, the service requirement of the target data, a target area of the target data, identity information of the second terminal device, or identity information of the first terminal device, wherein
the target area is a corresponding area to which the target data is to be transmitted.

11. The method according to any one of claims 1 to 5 or 8 to 10, wherein when the determined communication mode is the PC5 interface communication mode, the method further comprises:
sending, by the first terminal device, a communication mode indication message to the network device, wherein the communication mode indication message is used to indicate that the first terminal device performs communication in the PC5 interface communication mode.

12. A communication method, comprising:
obtaining, by a network device, communication quality reference information of a Uu interface, wherein the Uu interface comprises a Uu interface of a first terminal device and/or a Uu interface of a second terminal device, the first terminal device is a transmit end of target data, and the second terminal device is a receive end of the target data; and
sending, by the network device, the communication quality reference information of the Uu interface to the first terminal device.

13. The method according to claim 12, wherein the communication quality reference information of the Uu interface comprises:
communication quality information of the Uu interface of the first terminal device and/or communication quality information of the Uu interface of the second terminal device; or
indication information, wherein the indication information is used to indicate whether communication quality of the Uu interface meets a service requirement of the target data.

14. The method according to claim 13, wherein the obtaining, by a network device, communication quality reference information of a Uu interface comprises:
receiving, by the network device, a request message from the first terminal device, wherein the request message is used to request the communication quality reference information of the Uu interface; and
obtaining, by the network device, the communication quality reference information of the Uu interface based on the request message.

15. The method according to claim 14, wherein the request message comprises at least one of the following:
identifier information of the target data, the service requirement of the target data, a target area of the target data, identity information of the second terminal device, or identity information of the first terminal device, wherein
the target area is a corresponding area to which the target data is to be transmitted.

16. The method according to claim 15, wherein
when communication quality of the Uu interface of the first terminal device meets the service requirement of the target data, the indication information is used to indicate that the communication quality of the Uu interface of the first terminal device meets the service requirement of the target data;
when communication quality of the Uu interface of the first terminal device does not meet the service requirement of the target data, the indication information is used to indicate that the communication quality of the Uu interface of the first terminal device does not meet the service requirement of the target data;
when communication quality of the Uu interface of the second terminal device meets the service requirement of the target data, the indication information is used to indicate that the communication quality of the Uu interface of the second terminal device meets the service requirement of the target data;
when communication quality of the Uu interface of the second terminal device does not meet the service requirement of the target data, the indication information is used to indicate that the communication quality of the Uu interface of the second terminal device does not meet the service requirement of the target data; or
when communication quality of the Uu interface of the first terminal device meets the service requirement of the target data, and communication quality of the Uu interface of the second terminal device meets the service requirement of the target data, the indication information is used to indicate that both the communication quality of the Uu interface of the first terminal device and the communication quality of the Uu interface of the second terminal device meet the service requirement of the target data.

17. The method according to claim 16, wherein when the communication quality of the Uu interface does not meet the service requirement of the target data, the method further comprises:
sending, by the network device, a service requirement adapted to the communication quality of the Uu interface to the first terminal device.

18. The method according to any one of claims 12 to 17, wherein the method further comprises:
receiving, by the network device, a communication mode indication message from the first terminal device, wherein the communication mode indication message is used to indicate that the first terminal device performs communication in a PC5 interface communication mode, and a PC5 interface is an interface for direct communication between the first terminal device and the second terminal device; and
releasing, by the network device, a communication resource on the Uu interface of the first terminal device based on the communication mode indication message.

19. A communications apparatus, comprising a communications unit and a processing unit, wherein
the communications unit is configured to receive communication quality reference information of a Uu interface from a network device; and
the processing unit is configured to determine, based on the communication quality reference information of the Uu interface and communication quality information of a PC5 interface, a communication mode used to send target data to a second terminal device, wherein
the communication mode is any one of the following: a Uu interface communication mode, a PC5 interface communication mode, or a multipath communication mode, the PC5 interface is an interface for direct communication between the apparatus and the second terminal device, and communications interfaces in the multipath communication mode comprise the PC5 interface and the Uu interface.

20. The apparatus according to claim 19, wherein the communication quality reference information of the Uu interface comprises:
communication quality information of a Uu interface of the apparatus and/or communication quality information of a Uu interface of the second terminal device; or
indication information, wherein the indication information is used to indicate whether communication quality of the Uu interface meets a service requirement of the target data, and the Uu interface comprises a Uu interface of the first terminal device and/or a Uu interface of the second terminal device.

21. The apparatus according to claim 19 or 20, wherein the processing unit is specifically configured to:
determine, based on the communication quality reference information of the Uu interface, the communication quality information of the PC5 interface, and the service requirement of the target data, the communication mode used to send the target data to the second terminal device.

22. The apparatus according to claim 21, wherein the communication quality reference information of the Uu interface comprises the indication information;
the processing unit is specifically configured to determine, based on the communication quality information of the PC5 interface, that communication quality of the PC5 interface does not meet the service requirement of the target data;
when the indication information is used to indicate that the communication quality of the Uu interface meets the service requirement of the target data, the processing unit determines that the communication mode used to send the target data to the second terminal device is the Uu interface communication mode; or
when the indication information is used to indicate that the communication quality of the Uu interface does not meet the service requirement of the target data, the processing unit determines that the communication mode used to send the target data to the second terminal device is the PC5 interface communication mode.

23. The apparatus according to claim 21, wherein the communication quality reference information of the Uu interface comprises the indication information; and
the processing unit is specifically configured to:
when the indication information is used to indicate that the communication quality of the Uu interface does not meet the service requirement of the target data, and the processing unit determines, based on the communication quality information of the PC5 interface, that communication quality of the PC5 interface meets the service requirement of the target data, determine that the communication mode used to send the target data to the second terminal device is the PC5 interface communication mode.

24. The apparatus according to claim 21, wherein the communication quality reference information of the Uu interface comprises the indication information; and
the processing unit is specifically configured to:
when the indication information is used to indicate that the communication quality of the Uu interface does not meet the service requirement of the target data, and the processing unit determines, based on the communication quality information of the PC5 interface, that communication quality of the PC5 interface does not meet the service requirement of the target data, determine that the communication mode used to send the target data to the second terminal device is the Uu interface communication mode, or determine that the communication mode used to send the target data to the second terminal device is the multipath communication mode.

25. The apparatus according to claim 21, wherein
the communications unit is further configured to receive a service requirement that is adapted to the communication quality of the Uu interface and that is from the network device; and
the processing unit is further configured to update the service requirement of the target data based on the service requirement adapted to the communication quality of the Uu interface.

26. The apparatus according to any one of claims 19 to 25, wherein the communications unit is further configured to:
send the target data to the second terminal device in the determined communication mode.

27. The apparatus according to any one of claims 19 to 26, wherein the communications unit is further configured to:
request, from the network device, the communication quality reference information of the Uu interface, and receive the communication quality reference information of the Uu interface from the network device.

28. The apparatus according to claim 27, wherein the communications unit is specifically configured to:
send a request message to the network device, wherein the request message is used to request the communication quality reference information of the Uu interface, and the request message comprises at least one of the following:
identifier information of the target data, the service requirement of the target data, a target area of the target data, identity information of the second terminal device, or identity information of the apparatus, wherein
the target area is a corresponding area to which the target data is to be transmitted.

29. The apparatus according to any one of claims 19 to 23 or 26 to 28, wherein when the determined communication mode is the PC5 interface communication mode,
the communications unit is further configured to send a communication mode indication message to the network device, wherein the communication mode indication message is used to indicate that the apparatus performs communication in the PC5 interface communication mode.

30. A communications apparatus, comprising a communications unit, wherein
the communications unit is configured to obtain communication quality reference information of a Uu interface, wherein the Uu interface comprises a Uu interface of a first terminal device and/or a Uu interface of a second terminal device, the first terminal device is a transmit end of target data, and the second terminal device is a receive end of the target data; and
the communications unit is further configured to send the communication quality reference information of the Uu interface to the first terminal device.

31. The apparatus according to claim 30, wherein the communication quality reference information of the Uu interface comprises:
communication quality information of the Uu interface of the first terminal device and/or communication quality information of the Uu interface of the second terminal device; or
indication information, wherein the indication information is used to indicate whether communication quality of the Uu interface meets a service requirement of the target data.

32. The apparatus according to claim 30 or 31, wherein
the communications unit is specifically configured to receive a request message from the first terminal device, wherein the request message is used to request the communication quality reference information of the Uu interface; and
the apparatus further comprises a processing unit, and the processing unit is configured to obtain the communication quality reference information of the Uu interface based on the request message.

33. The apparatus according to claim 32, wherein the request message comprises at least one of the following:
identifier information of the target data, the service requirement of the target data, a target area of the target data, identity information of the second terminal device, or identity information of the first terminal device, wherein
the target area is a corresponding area to which the target data is to be transmitted.

34. The apparatus according to claim 33, wherein
when communication quality of the Uu interface of the first terminal device meets the service requirement of the target data, the indication information is used to indicate that the communication quality of the Uu interface of the first terminal device meets the service requirement of the target data;
when communication quality of the Uu interface of the first terminal device does not meet the service requirement of the target data, the indication information is used to indicate that the communication quality of the Uu interface of the first terminal device does not meet the service requirement of the target data;
when communication quality of the Uu interface of the second terminal device meets the service requirement of the target data, the indication information is used to indicate that the communication quality of the Uu interface of the second terminal device meets the service requirement of the target data;
when communication quality of the Uu interface of the second terminal device does not meet the service requirement of the target data, the indication information is used to indicate that the communication quality of the Uu interface of the second terminal device does not meet the service requirement of the target data; or
when communication quality of the Uu interface of the first terminal device meets the service requirement of the target data, and communication quality of the Uu interface of the second terminal device meets the service requirement of the target data, the indication information is used to indicate that both the communication quality of the Uu interface of the first terminal device and the communication quality of the Uu interface of the second terminal device meet the service requirement of the target data.

35. The apparatus according to claim 34, wherein when the communication quality of the Uu interface does not meet the service requirement of the target data,
the communications unit is further configured to send a service requirement adapted to the communication quality of the Uu interface to the first terminal device.

36. The apparatus according to any one of claims 30 to 35, wherein
the communications unit is further configured to receive a communication mode indication message from the first terminal device, wherein the communication mode indication message is used to indicate that the first terminal device performs communication in a PC5 interface communication mode; and
the processing unit is further configured to release a communication resource on the Uu interface of the first terminal device based on the communication mode indication message.
